# EUROPÄISCHE PATENTSCHRIFT

(11) **EP 3 237 181 B1**
(45) Veröffentlichungstag und Bekanntmachung des Hinweises auf die Patenterteilung: **09.09.2020**
(21) Anmeldenummer: 15834788.0
(22) Anmeldetag: 18.12.2015
(51) Int. Cl.: B29C 64/165, B29C 64/264

(54) **VERFAHREN ZUM HERSTELLEN VON 3D-FORMTEILEN MITTELS SCHICHTAUFBAUTECHNIK**
METHOD FOR PRODUCING 3D SHAPED ARTICLES BY LAYERING
PROCÉDÉ DE FABRICATION DE PIÈCES EN 3D SELON LA TECHNIQUE D'IMPRESSION PAR COUCHES

(30) Priorität: 22.12.2014 DE 102014018914; 06.02.2015 DE 102015001409; 27.05.2015 DE 102015006533
(43) Veröffentlichungstag der Anmeldung: 01.11.2017
(73) Patentinhaber: voxeljet AG, 86316 Friedberg (DE)
(72) Erfinder: EDERER, Ingo, 82269 Geltendorf (DE); GÜNTHER, Daniel, 81317 München (DE); GÜNTHER, Johannes, 81371 München (DE); SCHECK, Christoph, 86154 Augsburg (DE)
(74) Vertreter: Helbig, Christian
(86) Internationale Anmeldenummer: PCT/DE2015/000598
(87) Internationale Veröffentlichungsnummer: WO 2016/101942

(56) Entgegenhaltungen:
- WO-A1-2005/011959
- WO-A1-2005/090055
- WO-A1-2013/021173
- DE-C1- 10 104 732
- GB-A- 2 422 344

## Beschreibung

Die Erfindung bezieht sich auf ein Verfahren zum Herstellen dreidimensionaler Modelle mittels Schichtaufbautechnik.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wird die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt. Ein solches Verfahren wird auch in der WO 2013/021173 A1 offenbart.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse (auch als schichtweises Aufbauen von Modellen oder als Schichtbautechnik bezeichnete Verfahren), wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren verstanden.

Das 3D-Drucken auf Basis pulverförmiger Werkstoffe und Eintrag flüssiger Binder ist unter den Schichtbautechniken das schnellste Verfahren.

Mit diesem Verfahren lassen sich verschiedene Partikelmaterialien, unter anderem auch polymere Werkstoffe, verarbeiten. Der Nachteil besteht hier jedoch darin, dass die Partikelmaterialschüttung eine gewisse Schüttdichte, die üblicherweise 60% der Feststoffdichte beträgt, nicht übersteigen kann. Die Festigkeit der gewünschten Bauteile hängt jedoch maßgeblich von der erreichten Dichte ab. Insofern wäre es hier für eine hohe Festigkeit der Bauteile erforderlich, 40% und mehr des Partikelmaterialvolumens in Form des flüssigen Binders zuzugeben. Dies ist nicht nur aufgrund des Einzeltropfeneintrages ein relativ zeitaufwändiger Prozess, sondern bedingt auch viele Prozessprobleme, die z.B. durch die zwangsläufige Schwindung der Flüssigkeitsmenge beim Verfestigen gegeben sind.

In einer anderen Ausführungsform, der unter dem Begriff "High-Speed-Sintering", abgekürzt HSS, in der Fachwelt bekannt ist, erfolgt die Verfestigung des Partikelmaterials über Eintrag von Infrarotstrahlung. Das Partikelmaterial wird dabei physikalisch über einen Aufschmelzvorgang gebunden. Hierbei wird die vergleichsweise schlechte Aufnahme von Wärmestrahlung bei farblosen Kunststoffen ausgenutzt. Diese lässt sich durch Einbringen eines IR-Akzeptors (Absorber) in den Kunststoff um ein Vielfaches steigern. Die IR-Strahlung kann dabei über verschiedene Möglichkeiten wie z.B. einer stabförmigen IR-Lampe eingebracht werden, die gleichmäßig über das Baufeld bewegt wird. Die Selektivität wird über das gezielte Bedrucken der jeweiligen Schicht mit einem IR-Akzeptor erreicht.

An den Stellen, die bedruckt wurden, koppelt die IR Strahlung dadurch wesentlich besser in das Partikelmaterial ein, als in den unbedruckten Bereichen. Dies führt zu einer selektiven Erwärmung in der Schicht über den Schmelzpunkt hinaus und damit zur selektiven Verfestigung. Dieser Prozess wird z.B. in EP1740367B1 und EP1648686B1 beschrieben und im Folgenden mit der Bezeichnung HSS abgekürzt.

Vom Lasersinterprozess sind verschiedene Materialien bekannt, die auch mit diesem Verfahren verarbeitet werden können. Dabei ist bei weitem das wichtigste Material Polyamid 12. Für dieses Material gibt es mehrere Hersteller. Es werden für Schichtbauverfahren ausgezeichnete Festigkeiten erzielt.

Das Material kann als feines Pulver bezogen werden, das direkt in dieser Qualität verarbeitet werden kann. Bedingt durch den Herstellungsprozess fallen aber hohe Kosten an, die die Kosten für Standardpolyamid um den Faktor 20-30 übertreffen können.

Beim HSS-Prozess (high speed sintering) nach dem Stand der Technik wird das Pulver, genau wie bei Lasersintern, zur Verarbeitung auf eine Temperatur nahe des Schmelzpunktes des Materials gebracht. Dabei "altert" das Pulver und kann in Folgeprozessen nur noch bedingt eingesetzt werden. Es ergibt sich eine geringe Recyclingquote, die die Prozesskosten negativ beeinflusst.

Die Genauigkeit der Bauteile wird maßgeblich durch die Prozessführung beeinflusst. Dabei ist die Homogenität der Größen wie Pulverbettdichte und Temperatur im Bauraum entscheidend.

Die bekannten Verfahren des HSS beinhalten eine Vielzahl von Nachteilen, die zum einen die Recyclingrate und zum anderen die Prozesskosten betreffen und damit die Stückkosten erhöhen und relativ teuer machen. Insbesondere ist die Alterung des Pulvers ein entscheidendes Problem und die damit verbundene geringe Recyclingrate sehr hinderlich bei der Verbreitung dieses Prozesses. Bislang müssen ca. 50 % des nicht in Teilen verbauten Pulvers nach einem Prozess ersetzt werden. Bei Pulverpreisen von ca. 80€/kg und Bauvolumen von mehreren hundert Litern sind hier hohe finanzielle Aufwendungen nötig.

Ein Ansatz zur Lösung der prozessbedingten Probleme und damit eine Kostensenkung ist die Verwendung von günstigeren Pulvern. Diesem Vorgehen sind allerdings enge Grenzen gesetzt, da die meisten Pulver kein ausreichendes "Sinterfenster" aufweisen, um sicher verarbeitet zu werden. Das bedeutet, dass für die Pulver kaum stabile Prozessgrößen gefunden werden können.

Die Pulveralterung chemisch Einzuschränken ist ein weiterer Ansatz. Dabei sind beispielsweise mit Stickstoff gespülte Maschinen im Lasersintern üblich. Damit kann Pulveroxidation verhindert werden. Ganz Einschränken kann man die Alterung aber schon verfahrensbedingt nicht, da ein Teil der Verfestigungsreaktion durch eine Nachreaktion des Polymers geschieht. Diese Nachreaktion einzuschränken würde wesentliche Festigkeitseinschränkungen bedeuten.

Ein Problem bei bekannten HSS Verfahren ist die Einstellung von vorteilhaften Verfahrensbedingungen wie z.B. der Temperaturfenster bezogen auf die verwendeten Partikelmaterialien. Das HSS Verfahren vereint sehr viele Prozessparameter und die hierin verwendeten 3D-Druckmaschinen weisen sehr viele konstruktive Merkmale und Bauteile auf, sodass es schwierig ist, die geeigneten Bauteile zusammen zu stellen und einen vorteilhaften oder verbesserten Verfahrensablauf einzustellen, die verbesserte Verfahrensbedingungen erlauben. Oft ist nicht feststellbar, welche konstruktiven Änderungen nötig sind, um annehmbare Verfahrensergebnisse zu erreichen und qualitativ hochwertige 3D-Teile zu erhalten bzw. das Verfahren zu optimieren.

Ein weiteres Problem bei der Einstellung der Verfahrensbedingungen ist die Verfahrensbedingungen so zu kombinieren, dass einerseits ein genügend festes Bauteil mit gewünschten und vorteilhaften Eigenschaften hergestellt wird und gleichzeitig das nicht zu verfestigende Partikelmaterial Verfahrensbedingungen ausgesetzt werden, damit ein leichtes Entpacken möglich bleibt. Ein Problem in dieser Hinsicht ist, dass das Umgebungsmaterial in dem Verfahren zu stark verfestigt wird und sich deshalb schlecht von dem Bauteil oder nur mit erhöhtem Aufwand trennen lässt.

Es war deshalb eine Aufgabe der vorliegenden Erfindung konstruktive Mittel bereitzustellen, die ein verbessertes HSS Verfahren erlauben oder zumindest die Nachteile des Standes der Technik zu verbessern oder ganz zu vermeiden.

Es war eine weitere Aufgabe der Erfindung verbesserte Verfahrensbedingungen im HSS Verfahren bereitzustellen bzw. durch eine gezielte Auswahl von Vorrichtungskomponenten oder/und die Einstellung von Verfahrensbedingungen verbesserte Verfahrensergebnisse zu erzielen.

Ein weiteres Problem und ein weiterer Nachteil bei der Herstellung von 3D-Formteilen mit HSS sind Temperaturgradienten, die über die Fläche des herzustellenden Bauteils und das Bauteil umgebende Baumaterial bis hin zu den Randbereichen der Bauplattform auftreten. Damit gehen Nachteil einher, die entweder störend für das Verfahren selbst sind oder Qualitätsnachteile bedingen, wie z.B. Curling, Verzug, Ungenauigkeit des Formteils oder erhöhter Ausschuss.

Während des HSS Verfahrens wird zyklisch die Oberflächentemperatur der Pulverschüttung selektiv erhöht und erniedrigt und am Ende des Aufbauprozesses das fertige Formteil vollständig abgekühlt.

Die Temperatur in dem aufzubauenden Formteil sollte idealerweise möglichst konstant auf einem Wert knapp oberhalb der Erstarrungstemperatur liegen und nur in der Aufbauzone innerhalb eines schmalen Temperaturbandes, das den Schmelzpunkt des Pulvers übersteigt schwanken. Aufgrund der Abstrahlung und Wärmeleitung in das umliegende Partikelmaterial, kühlt der Formteilrand schneller ab als innere Bereiche und es kommt zu unerwünschten Temperaturunterschieden im Formteil mit den oben erwähnten Nachteilen.

Eine weitere Aufgabe der vorliegenden Erfindung war es somit, ein Verfahren, ein Materialsystem und/oder eine Vorrichtung bereitzustellen, die die Alterung des unverbauten Pulvers aufgrund thermischer Schädigung reduzieren hilft oder diese ganz verhindert.

Eine weitere Aufgabe der vorliegenden Erfindung war es, ein Verfahren bereit zu stellen, das es erlaubt im herzustellenden Formteil eine gleichbleibende, kontrollierbare und/oder eine im wesentlichen gleichmäßige Temperaturverteilung in dem herzustellenden 3D-Formteil und/oder das dieses Formteil umgebende Baumaterial während des Aufbauprozesses zu erreichen und/oder zu hohe und ungünstige Temperaturgradienten über die Aufbaufläche zu vermeiden oder zumindest zu vermindern.

Kurze Zusammenfassung der Offenbarung Die Erfindung betrifft ein Verfahren zum Herstellen von 3D-Formteilen gemäß Anspruch 1.

In einem alternativen Aspekt betrifft die Offenbarung ein Verfahren zum Herstellen von 3D-Formteilen, wobei partikelförmiges Baumaterial in einer definierten Schicht mittels Beschichter auf ein Baufeld aufgetragen wird, selektiv eine oder mehrere Flüssigkeiten oder Partikelmaterials eines oder mehrerer Absorber aufgebracht werden, diese Schicht erwärmt wird, wobei die Bereiche mit selektiv aufgebrachtem Absorber stärker erhitzen als die Bereiche ohne Absorber und somit ein Temperaturunterschied zwischen Bereichen mit und ohne Absorber eingestellt wird, das Baufeld um eine Schichtstärke abgesenkt oder der Beschichter um eine Schichtstärke angehoben wird, diese Schritte wiederholt werden, bis das gewünschte 3D-Formteilen erzeugt ist und um das 3D-Formteil herum zusätzlicher Absorber zur Erstellung mindestens eines Mantels mit mindestens zum umgebenden Partikelmaterial erhöhter Temperatur eingedruckt wird.

In einem alternativen Aspekt wird ein Temperaturunterschied bei gleichem Wärme- oder Energieeintrag lokal durch Aufbringen von unterschiedlichen Absorbern oder durch unterschiedliche Absorbermenge erzielt.

In einem weiteren Aspekt betrifft die Offenbarung ein 3D-Formteil hergestellt mittels Verwendung eines Absorbers, wobei das 3D-Formteil im Wesentlichen vollumfänglich von einem Mantel mit erhöhter Temperatur umgeben ist und dieser Mantel mittels Verwendung eines Absorbers aufgebaut wurde und sich zwischen dem 3D-Formteil und dem Mantel nicht verfestigtes partikelförmiges Baumaterial befindet.

In einem dritten Aspekt betrifft die Offenbarung eine Vorrichtung, die geeignet ist zum Durchführen eines erfindungsgemäßen Verfahrens.

In einem weiteren Aspekt, der auch mit den anderen Aspekten wie sie hierin offenbart sind kombiniert werden kann, betrifft die Offenbarung eine Vorrichtung und ein Verfahren, bei dem die Temperatureinstellung des Partikelmaterials und der zu verfestigenden Bereiche im Partikelmaterial mit mindestens zwei Strahlern (Sinterlampe) oder einem Strahler mit unterschiedlichen Wellenlängen oder/und Energieeintrag durchgeführt wird.

Ausführliche Beschreibung der Offenbarung Erfindungsgemäß wird eine der Anmeldung zugrunde liegenden Aufgabe dadurch gelöst, dass gezielt vorteilhafte Baukomponenten und Verfahrensparameter kombiniert werden, die zu vorteilhaften Verfahrensergebnissen führen.

Weitere der Anmeldung zugrunde liegenden Aufgaben werden dadurch gelöst, dass das nahe Umfeld der Bauteile durch eine gewisse Menge des Absorbers als aktive Wärmeisolation um das Bauteil genutzt wird. Hierdurch tritt ein kleinerer Temperaturgradient zwischen dem Bauteil und dem umliegenden Partikelmaterial, sodass das Auskühlen unter die Erstarrungstemperatur des Partikelmaterials verhindert wird und eine große Menge des umliegenden Pulvers nur noch auf eine weit niedrigere Temperatur erhitzt werden muss, als dies bisher notwendig ist. Damit kann das Pulver insgesamt mit einer niedrigeren Temperatur oder einem niedrigeren Temperatureintrag oder Energieeintrag in der Maschine verarbeitet werden und die Pulveralterung aufgrund thermischer Schädigung wesentlich reduziert werden. Lediglich ein kleines Volumen rund um das Bauteil muss auf Grund der starken Wärmewirkung entsorgt werden.

Des Weiteren wird durch die nun besser steuerbare Temperatur und die gleichmäßigere Temperaturverteilung innerhalb und über das aufzubauende Bauteil und die umgebenden Randbereiche ohne Absorber gesehen ein verbessertes Herstellungsergebnis erzielt.

Im Folgenden werden zunächst einige Begriffe der Erfindung näher erläutert.

"3D-Formteil", "Formkörper" oder "Bauteil" im Sinne der Erfindung sind alles mittels des erfindungsgemäßen Verfahrens hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände. Der Bauraum kann auch durch eine sogenannte Jobbox ausgestaltet sein, die eine in die Vorrichtung ein- und ausfahrbare Einheit darstellt und eine Batch-Herstellung erlaubt, wobei eine Jobbox nach Prozessabschluss ausgefahren wird und sofort eine neue Jobbox in die Vorrichtung eingefahren werden kann, sodass das Herstellungsvolumen und somit die Vorrichtungsleistung erhöht wird.

Die "Aufheizphase" kennzeichnet ein Erwärmen der Vorrichtung zu Beginn des Verfahrens. Die Aufheizphase ist abgeschlossen, wenn die Ist-Temperatur der Vorrichtung einen stationären Wert erreicht.

Die "Abkühlphase" bezeichnet die Dauer, die notwendig ist, um das Partikelmaterial so abzukühlen, dass die darin enthaltenen Bauteile keine merklichen plastischen Deformationen beim Entnehmen aus dem Bauraum erfahren.

Als "Partikelmaterialien" oder "partikelförmige Baumaterialien" oder "Baumaterialien" können alle für den Pulver-basierten 3D Druck bekannten Materialien verwendet werden, insbesondere Polymere, Keramiken und Metalle. Das Partikelmaterial ist vorzugsweise ein trocken frei fließendes Pulver, es kann aber auch ein kohäsives schnittfestes Pulver oder eine partikelbeladene Flüssigkeit verwendet werden. In dieser Schrift werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" kann im Sinne der Erfindung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Als "Vorrichtung" zum Durchführen des erfindungsgemäßen Verfahrens kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Dosiervorrichtungen und Wärme- und Bestrahlungsmittel und andere dem Fachmann bekannte Bauteile, die deshalb hier nicht näher ausgeführt werden.

Der "Absorber" ist im Sinne dieser Erfindung ein mit einem Tintenstrahldruckkopf oder mit einer anderen matrixartig arbeitenden Vorrichtung verarbeitbares Medium, das die Absorption von Strahlung zur lokalen Erwärmung des Baumaterials fördert. Der Absorber kann auch partikelförmig sein wie beispielsweise schwarzer Toner. Absorber können gleichmäßig oder in unterschiedlichen Mengen selektiv aufgebracht werden. Der Absorber kann z.B. als Gemisch von Absorbern mit unterschiedlichen Absorptionsmaxima aufgebracht werden oder unterschiedliche Absorber unabhängig voneinander, z.B. nacheinander, alternierend oder mit einer vorbestimmten Sequenz. Bei Aufbringen in unterschiedlichen Mengen kann man somit die Festigkeit in dem Baumaterial steuern und selektiv unterschiedliche Festigkeiten erzielen, beispielsweise in dem herzustellenden Formteil und den dieses umgebenden Mantel. Der Bereich der Festigkeit reicht von einer Festigkeit wie im Bauteil selbst bis zu eine Festigkeit, die nur unwesentlich über der des Baumaterials ohne Absorberaufdruck liegt. Damit wird es möglich eine Temperaturregulierung in dem Baufeld/Bauraum vorzunehmen und wenn gewünscht den Mantel, der der Temperaturregulierung dient, auch leicht um das hergestellte Bauteil zu entfernen.

Die "Absorption" bezeichnet die Aufnahme der Wärmeenergie von Strahlung durch das Baumaterial. Die Absorption ist abhängig vom Pulvertyp und der Wellenlänge der Strahlung.

Der "Träger" bezeichnet das Medium in dem der eigentliche Absorber vorhanden ist. Es kann sich um ein Öl, ein Lösemittel oder allgemein um eine Flüssigkeit handeln.

"Strahlungsinduzierte Erwärmung" bedeutet im Folgenden eine Bestrahlung des Baufeldes mit festen oder beweglichen Strahlungsquellen. Der Absorber ist auf die Strahlungsart abgestimmt und vorzugsweise optimiert. Dabei soll es zu einer unterschiedlich starken Erwärmung von "aktiviertem" und nicht "aktiviertem" Pulver kommen. "Aktiviert" bedeutet, dass durch den Absorbereindruck die Temperatur in diesen Bereichen erhöht wird im Vergleich zu den übrigen Bereichen im Bauraum.

"Basistemperatur" im Sinne der Erfindung ist die Temperatur, die im Bauraum auf der Oberfläche des Partikelmaterials und in dem aufgedruckten Partikelmaterial mit geeigneten Mitteln, z.B. einem IR-Strahler, eingestellt wird. Dabei wird die Basistemperatur so gewählt, dass sie bezogen auf das Partikelmaterial und in Zusammenspiel mit dem Absorber geeignet ist, um das selektive Verfestigen mit positiven Materialeigenschaften zu erreichen.

"IR-Erwärmung" bedeutet in dieser Schrift speziell eine Bestrahlung des Baufeldes mit einem IR-Strahler. Dabei kann der Strahler ebenso statisch sein oder mit einer Verfahreinheit über das Baufeld bewegt werden. Durch den Einsatz des Absorbers führt die IR-Erwärmung im Baufeld zu unterschiedlich starken Temperaturanstiegen.

Ein "IR-Strahler" ist eine Quelle von infraroter Strahlung. Dabei werden meist glühende Drähte in Quarz oder Keramikgehäusen zur Erzeugung der Strahlung benutzt. Je nach eingesetzten Materialien ergeben sich unterschiedliche Wellenlängen der Strahlung. Die Wellenlänge ist bei diesem Strahlertyp zusätzlich abhängig von der Leistung.

Eine "Overheadlampe" im Sinne der Erfindung ist eine Strahlungsquelle die über dem Baufeld angebracht ist. Sie ist stationär kann aber in ihrer Strahlungsleistung reguliert werden.

Die "Sinterlampe" ist eine Strahlungsquelle, die das Prozesspulver (partikelförmiges Baumaterial) über seine Sintertemperatur erhitzt. Sie kann stationär sein. In bevorzugten Ausführungen wird sie aber über das Baufeld bewegt.

"Sintern" oder "Schmelzen" ist der Begriff für das partielle Zusammenwachsen der Partikel im Pulver. Mit dem Sintern verbunden ist bei diesem System der Aufbau von Festigkeit.

Der Begriff "Sinterfenster" bezeichnet die Differenz der Temperatur des beim ersten Aufheizen des Pulvers auftretenden Schmelzpunktes und dem bei anschließendem Abkühlen auftretenden Erstarrungspunktes.

Die "Sintertemperatur" ist die Temperatur ab der das Pulver erstmalig aufschmilzt und sich verbindet.

Unterhalb der "Rekristallisationstemperatur" wird einmal aufgeschmolzenes Pulver wieder fest und schwindet deutlich.

"Recyclingquote" bezeichnet das Verhältnis der Menge Partikelmaterial, die nach Abschluss des Bauprozesses für einen neuen Prozesslauf verwendet werden kann zur Menge des Partikelmaterials das für einen Prozesslauf insgesamt benötigt wird. Partikelmaterialien, die sich aufgrund des Bauprozesses in ihren Eigenschaften verändern, bedingen in manchen Fällen eine Zumischung eines nicht im Prozess verwendeten Anteils an Partikelmaterial. Typisches Beispiel ist Polyamid 12, dass bei Aufheizung nahe an den Schmelzpunkt irreversibel thermisch geschädigt wird.

Die "Packungsdichte" beschreibt die Ausfüllung des geometrischen Raumes durch Feststoff. Sie hängt von der Natur des Partikelmaterials und der Auftragsvorrichtung ab und ist eine wichtige Ausgangsgröße für den Sinterprozess.

Der Begriff "Schwindung" bezeichnet den Vorgang der geometrischen Verkürzung einer Abmessung eines geometrischen Körpers infolge eines physikalischen Vorganges. Beispielhaft ist das Sintern von nicht ideal gepackten Pulvern ein Vorgang, der eine Schwindung relativ auf das Anfangsvolumen mit sich bringt. Einer Schwindung kann eine Richtung zugeordnet werden.

"Deformation" tritt auf, wenn der Körper bei einem physikalischen Prozess eine ungleichmäßige Schwindung erfährt. Diese Deformation kann reversibel oder irreversibel sein. Die Deformation wird oft auf die globale Geometrie des Bauteils bezogen.

Als "Curling" wird hier ein Effekt bezeichnet, der vom schichtweisen Vorgehen bei der beschriebenen Erfindung kommt. Dabei sind jeweils kurz nacheinander erzeugte Schichten einer unterschiedlichen Schwindung ausgesetzt. Durch physikalische Effekte deformiert sich der Verbund dann in einer Richtung, die nicht mit der Richtung der Schwindung zusammenfällt.

Der "Grauwert" bezeichnet die in das Pulver eingedruckte Menge des Absorbers. Dabei können erfindungsgemäß verschiedene Grauwerte auf das Baufeld aufgedruckt werden, um unterschiedliche Erwärmungsgrade zu erzielen.

Das Baumaterial wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,1 bis 0,3 mm. "Temperaturunterschied" bezeichnet den Unterschied der Temperatur im Baufeld in Bereichen, die mit Absorber bedruckt oder nicht bedruckt werden und damit verfestigt werden sollen oder nicht. Dabei kann das Ziel auch sein, Bereiche nur teilweise zu verfestigen oder nur sehr geringfügig zu verfestigen und sogar im wesentliche nicht zu verfestigen, trotz Absorbereindruck wie in bevorzugten Ausführungsformen für den Mantel zutreffend. Entsprechend wird das Temperaturdelta variieren.

"Temperaturband" bezeichnet den Temperaturbereich innerhalb dessen Bereiche des Partikelmaterials während des Schichtaufbauprozesses aufgeheizt und wieder abgekühlt werden.

"Temperieren" bezeichnet das Einstellen einer gewünschten Temperatur im Bauraum, der konstant gehalten werden kann oder zyklisch variiert werden kann. Vorzugsweise wird eine Grundtemperatur auf einen gewählten Wert eingestellt.

"Mantel" im Sinne der Offenbarung ist ein Bereich oder eine Schicht, die das Formteil umgibt und der während des Schichtaufbauprozesses mehr erwärmt wird, als das außerhalb liegende Pulver, das weder zum Mantel noch zum Formteil gehört. Mit Hilfe des Mantels kann die Temperatur in dem Verfahren örtlich speziell im gewünschten Formteil reguliert werden. Der Mantel ist gekennzeichnet durch zumindest teilweisen Absorbereindruck. Vorzugsweise wird in jeder Schicht Absorber in den Mantel eingedruckt oder in regelmäßig wiederkehrenden Schichten. Dieser Mantel kann mehrere Millimeter stark sein und umgibt das herzustellende Formteil vollumfänglich und gesamtheitlich. Alternativ kann der Mantel aus wiederkehrenden Ringen bestehen (in Aufbaurichtung von unten nach oben), die das Formteil umgeben, und die durch Absorbereindruck gekennzeichnet sind. Der Mantel kann eine Festigkeit aufweisen, die der des Formteils entspricht, vorzugsweise ist seine Festigkeit geringer als die des Formteils. In einer bevorzugten Ausführungsform weist der Mantel nur eine geringfügig höhere Festigkeit als das Baumaterial selbst auf und kann so vorteilhaft nach dem Aufbauverfahren leicht von dem Formteil entfernt werden.

Verschiedene Aspekte der Erfindung werden im Folgenden beschrieben. Die Erfindung betrifft in einem Aspekt ein Verfahren zum Herstellen von 3D-Formteilen, wobei partikelförmiges Baumaterial in einer definierten Schicht mittels Beschichter auf ein Baufeld aufgetragen wird, selektiv eine oder mehrere Flüssigkeiten oder Partikelmaterial eines oder mehrerer Absorber aufgebracht werden, diese Schicht durch einen ersten Aufheizschritt auf eine Basistemperatur des Pulvers ohne Absorber, welches sich innerhalb des Sinterfensters des Polyamidpulvers befindet, erwärmt wird und ein zweiter Sinterschritt durch Wärmezufuhr zu einer selektiven Verfestigung der mit Absorber bedruckten Bereiche bei einer Sintertemperatur oberhalb der Schmelztemperatur des Pulvers führt, wobei die Bereiche mit selektiv aufgebrachtem Absorber im ersten Schritt stärker erhitzen als die Bereiche ohne Absorber und somit eine Temperaturdifferenz zwischen Bereichen mit und ohne Absorber eingestellt wird, das Baufeld um eine Schichtstärke abgesenkt oder der Beschichter um eine Schichtstärke angehoben wird, diese Schritte wiederholt werden bis das gewünschte 3D-Formteilen erzeugt ist, wobei der Aufheizschritt auf die Basistemperatur über einen Strahler mit einer Wellenlänge von 3 - 8 µm, und der Sinterschritt durch einen Strahler mit einer Wellenlänge von 0.5 - 1,5 µm.

Mit dem erfindungsgemäßen Verfahren wurde eine besonders vorteilhafte Kombination von verschiedenen Verfahrensbedingungen gefunden, die in überraschender Weise zu sehr vorteilhaften Verfahrensergebnissen führt und die Herstellung von qualitativ hochwertigen 3D-Formteilen im HSS Verfahren erlaubt.

Ein Aspekt dabei ist die präzise Auswahl und Einstellung des Wellenlängenbereichs des Strahlers, um zusammen mit den anderen ausgewählten Verfahrensparametern diese vorteilhaften Verfahrensergebnisse zu erhalten. Dabei ist die Wellenlänge wie oben ausgeführt zu wählen, wobei die Wellenlänge die Peakwellenlänge der Schwarzkörperstrahlung ist.

Es wird ein mit den anderen Verfahrensbedingungen geeigneter Absorber verwendet, wobei der Absorber vorzugsweise eine Flüssigkeit ist, die vorzugsweise eine ölbasierte Tinte ist und die Kohlenstoffpartikel enthält. Ein Beispiel für eine geeignete Tinte ist XAAR IK821.

Es wird vorzugsweise ein partikelförmiges Baumaterial mit einer mittleren Körngröße von 50 - 60 µm, vorzugsweise 55 µm, einer Schmelztemperatur von 180 - 190 °C, vorzugsweise von 186 °C und/oder einer Rekristallisationstemperatur von 140 - 150 °C, vorzugsweise von 145 °C, in dem erfindungsgemäßen Verfahren verwendet. Beispiele derartiger Baumaterialien sind ein Polyamid12, PA2200® oder Vestosint1115®.

Der Zyklus des Schichtauftrages wird dabei in Übereinstimmung mit den anderen Verfahrensparametern ausgewählt und ein vollständiger Zyklus eines Schichtauftrags beträgt 20 bis 40 s. Unter "vollständiger Zyklus eines Schichtauftrags" ist dabei der Ablauf zu verstehen, bei dem Beschichter und Druckeinheit jeweils über die gesamte Fläche des Baufeldesverfahren.

Die Basistemperatur wird vorteilhafter Weise auf 145 °C bis 186 °C eingestellt, vorzugsweise auf 160 °C bis 180 °C und/oder die Sintertemperatur wird auf 175 °C bis 220 °C, vorzugsweise auf 190 °C bis 210 °C, eingestellt.

In einer besonders bevorzugten Ausführungsform des erfindungsgemäßen Verfahrens wird die Temperatur- bzw. Wärmezufuhr über einen Strahler oder eine Wärmelampe erreicht, der vorzugsweise eine Glas- oder Keramiklampe ist, und wobei vorzugsweise der Abstand von Strahler zu Baufeldoberfläche 10 bis 50 cm, vorzugsweise 15 bis 30 cm, mehr bevorzugt 15 bis 25 cm, beträgt.

Mit den oben dargestellten Verfahrensparametern in der dargestellten Kombination konnten überraschender Weise sehr vorteilhafte Verfahrensergebnisse erreicht werden.

In einem nicht erfindungsgemäßen Verfahren zum Herstellen von 3D-Formteilen, wobei partikelförmiges Baumaterial in einer definierten Schicht mittels Beschichter auf ein Baufeld aufgetragen wird, selektiv eine oder mehrere Flüssigkeiten oder Partikelmaterials eines oder mehrerer Absorber aufgebracht werden, diese Schicht erwärmt wird, wobei die Bereiche mit selektiv aufgebrachtem Absorber stärker erhitzen, als die Bereiche ohne Absorber und somit ein Temperaturunterschied zwischen Bereichen mit und ohne Absorber eingestellt wird, das Baufeld um eine Schichtstärke abgesenkt oder der Beschichter um eine Schichtstärke angehoben wird, diese Schritte wiederholt werden bis das gewünschte 3D-Formteilen erzeugt ist und um das 3D-Formteil herum zusätzlich Absorber zur Erstellung mindestens eines Mantels eingedruckt wird.

Besonders bevorzugt ist eine Ausführungsform, wobei eine Erhitzung derart stattfindet, dass nur die mit Absorber bedruckten Bereiche sich durch partielles Schmelzen oder Sintern verbinden.

Mit dem erfindungsgemäßen Verfahren werden die oben ausgeführten Probleme oder Nachteile zumindest vermindert oder ganz vermieden. Insbesondere wird die Recyclingrate des Baumaterials und somit die Wirtschaftlichkeit erhöht. Auch wird es möglich, die Temperatur im Bauraum und den einzelnen Bereichen des Baumaterials besser abgestimmt einzustellen und Probleme wie Curling zu vermindern oder ganz zu beseitigen.

Das Baumaterial kann in jeder geeigneten Form und mit der Vorrichtung auftragbaren Mitteln vorliegen. Die für das Verfahren verwendete Vorrichtung kann mit geeigneten Mitteln und baulich mit bekannten Mitteln an die Baumaterialien angepasst werde. Vorzugsweise wird das Baumaterial als Pulver oder als Dispersion verwendet.

Die Temperatur in dem Bauraum wird auf eine für das Verfahren vorteilhafte und auf das Baumaterial angepasste Temperatur eingestellt, die auch als Grundtemperatur bezeichnet werden kann. Nach dem Schichtauftrag wird die neu aufgetragene Schicht vorzugsweise flächig oder in überstreichender Weise durch Strahlung so erwärmt, dass sie schnell die Grundtemperatur erreicht.

Auch das Baumaterial auf dem Baufeld bzw. in der Jobbox kann vorzugsweise temperiert werden.

Es können allgemein aus HSS Verfahren bekannte Absorber verwendet werden, wobei vorzugsweise in dem 3D-Formteil und dem Mantel unterschiedliche oder vorzugsweise der gleiche Absorber verwendet werden.

Der Absorber kann auf alle selektiven Bereiche in gleicher oder in unterschiedlichen Mengen aufgebracht werden. Vorzugsweise wird im Mantelbereich weniger Absorber aufgebracht. Weiterhin kann der Absorberauftrag im Mantelbereich so gewählt werden, dass damit die Festigkeit des Mantels einerseits eingestellt wird und andererseits die Temperatur mittels Absorbereintrag in den Mantel und mittels Auswahl der Manteldicke beeinflusst werden kann. Vorzugsweise wird für den Mantel derselbe oder ein anderer Absorber wie für das Formteil verwendet.

Der Absorber wird je nach den gewünschten Eigenschaften und Effekten in dem Verfahren ausgewählt und dosiert. Vorzugsweise verhindert der für den Mantel verwendete Absorber das Sintern des Baumaterials.

Die selektiv aufgedruckte Flüssigkeit kann der Absorber selbst sein oder diesen enthalten oder umfassen und zusätzlich weitere Stoffe enthalten. Vorzugsweise umfasst der Absorber strahlungsabsorbierende Bestandteile, Weichmacher für das partikelförmige Baumaterial. Wird Polyamid oder ein ähnlicher Werkstoff als Partikelmaterial verwendet kann der Absorber zusätzlich ein oder mehrere Stoffe zur Störung der Rekristallisation enthalten.

In einem bevorzugten Aspekt des Verfahrens wird für jeden Absorber eine Strahlungsquelle verwendet, vorzugsweise werden zwei Absorber mit zwei Strahlungsquellen verwendet.

Als Strahlungs- oder Wärmequelle kann jedes geeignete Mittel verwendet werden, wobei die Strahlungsquellen bevorzugt Infrarote Strahlung im Wellenlängenbereich von 1 bis 20 µm abgeben.

In einer weiteren bevorzugten Ausführungsform des Verfahrens wird der Mantel in einer Wandstärke von 1 bis 10 mm, vorzugsweise 2 bis 5 mm und mehr bevorzugt von 3 mm aufgebaut. Dabei kann der Mantel durch den Prozess verfestigt oder nicht verfestigt werden. Vorzugsweise wird der Mantel durch den Prozess nicht verfestigt.

Ein wichtiger Aspekt der Erfindung ist die Temperaturführung in dem Verfahren, insbesondere in den Bereichen des Absorber-Auftrages und den Bereichen, auf die kein Absorber aufgetragen wird. Hierbei werden die Temperaturen, die Temperaturunterschiede, die Zyklisierung der Temperatur auf jedes Baumaterial und den verwendeten Absorber abgestimmt, um die erwünschen Formteile zu erhalten und die vorteilhaften Wirkungen des erfindungsgemäßen Verfahrens zu erzielen.

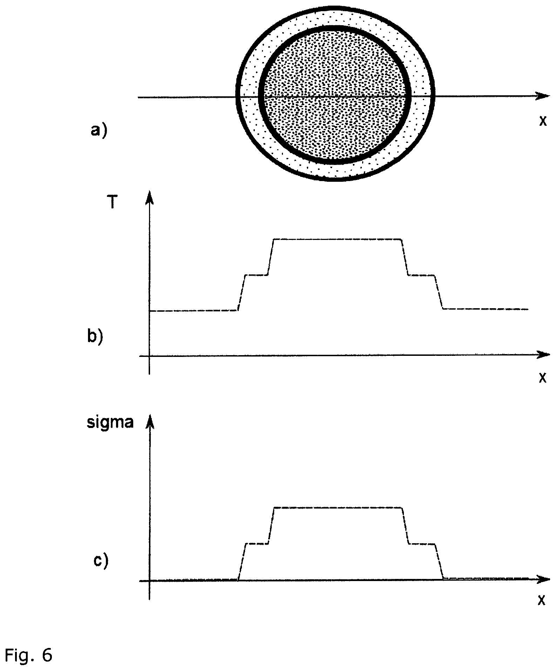

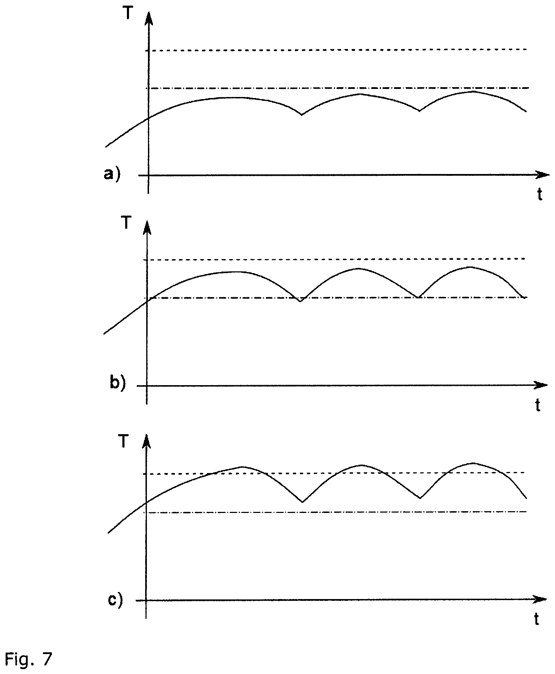

Dabei kann wie folgt vorgegangen werden. Vorzugsweise werden in dem aufgebrachten Baumaterial dieselbe Temperatur oder lokal unterschiedliche Temperaturen eingestellt oder erzeugt. Vorzugsweise wird in dem Mantel eine Temperatur eingestellt, die unterhalb der Sintertemperatur des Baumaterials in diesem Bereich liegt. Es kann auch ein bestimmtes Temperaturprofil eingestellt oder erzielt werden indem der Mantel entsprechend gebildet wird und platziert wird. Vorzugsweise wird ein Temperaturprofil in dem aufgebrachten Baumaterial erzeugt, das gekennzeichnet ist durch eine Temperaturverteilung niedrig:höher:noch höher (T1<T2<T3) in den Bereichen Bereich außerhalb des Mantels : Bereich des Mantels : Bereich innerhalb des Mantels (Mantel<Bereich Mantel<Bereich innerhalb Mantel) gemäß Figur 6.

Andererseits wird die in dem Baufeld erzielte Temperatur unmittelbar durch den Energieeintrag gesteuert, wobei der Mantel die lokale Temperatureinstellung beeinflusst. Vorteilhafter Weise kann ein Wärme- oder Energieeintrag gleichmäßig oder lokal unterschiedlich über das Baufeld vorgenommen werden.

Die Temperatureinstellung kann wie dargestellt mittels Mantelaufbau gesteuert werden und ist durch den Eintrag des Absorbers steuerbar. Vorzugsweise wird für den Mantel ein Absorber verwendet, der einen höheren Siedepunkt aufweist als der Absorber, der für das 3D-FOrmtiel verwendet wird. Vorzugsweise wird die Menge des oder der Absorber über Graustufen des Druckkopfes oder Ditheringverfahren reguliert.

Zum Aufbringen der Flüssigkeit und des Absorbers werden bekannte Druckköpfe mit geeigneter Technik verwendet. Die Flüssigkeit kann mittels eines oder mehrerer Druckköpfe selektiv aufgebracht werden. Vorzugsweise sind der oder die Druckköpfe in ihrer Tropfenmasse einstellbar. Der oder die Druckköpfe können die Flüssigkeit in einer oder in beiden Verfahrrichtungen selektiv aufbringen. In dem Verfahren wird erreicht, dass das partikelförmige Baumaterial selektiv verfestigt, vorzugsweise selektiv verfestigt und gesintert wird.

Innerhalb des Bauprozesses werden Baumaterial und Absorber zyklisch aufgetragen. Dabei wird das Baufeld um die gewählte Schichtstärke abgesenkt bzw. die Auftragseinheiten entsprechend angehoben. Diese Vorgänge werden zyklisch wiederholt. Entsprechend wird auch die Grundtemperatur im Baumaterial eingestellt und dann zyklisch die Temperatur in ausgewählten Bereichen in einem Temperaturband über die Grundtemperatur angehoben und wieder abgesenkt. Das Temperaturband wird durch das Material bestimmt. Vorzugsweise erstreckt sich das Temperaturband abhängig von der Auswahl des Baumaterials ausgehend vom Schmelzpunkt des Baumaterials in einem Bereich von 0 bis -50 K, 0 bis -30 K, 0 bis -20 K und 0 bis 10K.

Die unterschiedlichen Bereiche auf dem Baufeld werden auf entsprechende Temperaturen eingestellt. Vorzugsweise liegt der Temperaturunterschied zwischen Bereichen mit und ohne Absorber im Bereich von 0,5 bis 30 K. Weiterhin ist in dem erfindungsgemäßen Verfahren der Temperaturbereich von Bedeutung, der in dem mit Absorber bedruckten Bereich und den übrigen Bereichen eingestellt wird. Vorzugsweise wird die Temperatur in dem mit Absorber bedruckten Bereich oder dem Bereich innerhalb des Mantels vorzugsweise in einem Temperaturbereich von 0 bis -30 K, vorzugsweise 0 bis -25 K, mehr bevorzugt 0 bis -15 K zum Schmelzpunkt des Baumaterials eingestellt.

In einer bevorzugten Ausführungsform wird der Absorber und die Temperatur so ausgewählt, dass der Mantel nach dem Bauprozess leicht durch Pulverstrahlen oder mittels Luftstrahl entfernt werden kann.

Ein weiterer Aspekt der Offenbarung ist das mit dem erfindungsgemäßen Verfahren hergestellte 3D-Formteil. Das Formteil weist vorzugsweise im Wesentlichen vollumfänglich einen Mantel auf von dem es umgeben ist, wobei dieser Mantel mittels Verwendung eines Absorbers aufgebaut wurde und sich zwischen dem 3D-Formteil und dem Mantel nicht verfestigtes partikelförmiges Baumaterial befindet. In dem Formteil können verschiedene Festigkeiten eingestellt werden. Vorzugsweise weist der Mantel eine Festigkeit auf, die im Vergleich zu dem Bauteil geringer, im Wesentlichen gleich oder höher ist.

Alternativ wird das 3D-Formteil hergestellt mittels Verwendung eines Absorbers, wobei das 3D-Formteil im Wesentlichen vollumfänglich von einem Mantel umgeben ist und dieser Mantel mittels Verwendung eines Absorbers aufgebaut wurde und der Mantel nach dem Bauprozess leicht durch Pulverstrahlen oder einem Luftstrahl entfernt werden kann. Dabei kann der Mantel seitlich um das 3D-Formteil nach oben während des Aufbauprozesses aufgebaut werden. Dies geschieht zeitlich parallel zum Aufbau des 3D-Formtiels.

Ein weiterer Aspekt der Offenbarung ist eine Vorrichtung, die geeignet ist zum Durchführen eines erfindungsgemäßen Verfahrens. Vorzugsweise ist die Vorrichtung temperierbar und sie weist vorzugsweise eine Isolierung (506) an der Bauplattform (102) nach unten und/oder vorzugsweise seitlich auf. Außerdem kann die Vorrichtung eine Widerstandsheizung (504) aufweisen. Die Bauplattform (102) kann sich unmittelbar in der Vorrichtung befinden oder sie kann Bestandteil einer Jobbox oder eines Baubehälters sein. Vorzugsweise ist die Vorrichtung gekennzeichnet durch eine Bauplattform (102) in einem Baubehälter (110), wobei der Baubehälter (110) vorzugsweise temperierbar ist.

Es können verschiedene Wärmelampen, Bestrahlungseinrichtungen etc. Teil der Vorrichtung sein. Vorzugsweise weist die Vorrichtung ein oberhalb der Bauplattform angebrachtes Heizmittel auf, vorzugsweise eine Overheadlampe (108). Vorzugsweise weist die Vorrichtung ein bewegliches Heizmittel auf, vorzugsweise eine Sinterlampe (109).

In einem weiteren Aspekt, der mit den oben beschriebenen Aspekten und Merkmalen in jeglicher Weise kombiniert werden kann, wird der Sintervorgang oder das Verbinden des Partikelmaterials, das selektiv mit Absorber bedruckt wurde, dadurch noch weiter verbessert, dass die Temperaturregelung bzw. der Energieeintrag differenziert erfolgt und somit ein Bauteil mit verbesserten Eigenschaften erhalten werden kann.

In diesem weiteren Aspekt betrifft die Offenbarung ein 3D-Druckverfahren sowie eine Vorrichtung geeignet dafür, das vorzugsweise als HSS-Verfahren durchgeführt wird, und dadurch gekennzeichnet ist, dass zwei Sinterlampen mit unterschiedlichem Wellenlängenspektrum oder Energieeintrag verwendet werden, vorzugsweise zwei Sinterlampen oder eine Sinterlampe, deren Spektrum dadurch gekennzeichnet ist, aus zwei zueinander verschiedenen Schwarzkörperstrahlungsspektren zusammen gesetzt zu sein, oder dadurch gekennzeichnet ist, ein zum Schwarzkörperstrahlungspektrum verschiedenes Spektrum aufzuweisen. Somit wird eine Vorrichtung und ein Verfahren offenbart, bei dem die Temperatureinstellung des Partikelmaterials und der zu verfestigenden Bereiche im Partikelmaterial mit mindestens zwei Strahlern (Sinterlampe) oder einem Strahler mit unterschiedlichen Wellenlängen oder/und Energieeintrag durchgeführt wird.

In einem bevorzugten Aspekt werden dazu mindesten zwei Sinterlampen in der Vorrichtung eingesetzt, die ein unterschiedliches Strahlenspektrum abdecken. Damit können die Verfahrensbedingungen weiter differenziert eingestellt werden. Somit wird vorteilhaft erreicht, dass für das unbedruckte und von Absorber freie Pulver eine Temperatur erreicht wird, die nicht zu hoch ist und so ein unerwünschtes Verkleben dieses Materials im Wesentlichen verhindert, andererseits kann eine optimierte Schmelztemperatur im Bereich des Absorber enthaltenden Partikelmaterials erzielt werden.

Bevorzugt werden zwei Sinterlampen verwendet, die vorzugsweise unabhängig voneinander ansteuerbar sind und unabhängig über das Baufeld verfahren werden können. Für jede Sinterlampe wird ein auf das jeweilige Partikelmaterial und den einzudruckenden Binder abgestimmtes Wellenlängenspektrum bzw. Wellenlänge ausgewählt und mit den anderen Verfahrensparametern wie Verfahrgeschwindigkeit, Basistemperatur, Partikelschichtdicke abgestimmt. Auch kann jede Sinterlampe mit einer vorgewählten Stärke seiner Leistung eingesetzt werden, wie z.B. 50, 60, 70, 80, 90% seiner Maximalleistung. Eine typische Verfahrgeschwindigkeit der Sinterlampen liegt im Bereich von 90 bis 150 mm/sek., vorzugsweise bei 100 bis 120 mm/sek. Die mindestens zwei, vorzugsweise zwei Sinterlampen, sind vorzugsweise an den Beschichter gekoppelt oder unabhängig von diesem an eigenen Achsen angeordnet. Die zwei Sinterlampen haben unterschiedliche Wellenlängen und werden im Wesentlichen gleichzeitig über das Baufeld verfahren, vorzugsweise alternierend oder nacheinander. Dabei wird sowohl das Pulverbett mit dem aufgebrachten Partikelmaterial erwärmt oder die Temperatur dadurch eingestellt als auch mit Absorber bedruckte Bereiche. Allerdings ist die Absorption der Strahlung in den mit Absorber bedruckte Bereichen grösser und es wird so möglich die Schmelztemperatur in den zu verfestigenden Bereichen optimaler einzustellen, was sich positiv auf die Bauteileigenschaften auswirken, insbesondere in Hinblick auf die Festigkeit. Andererseits bleibt in den nicht mit Absorber bedruckten Bereichen die Temperatur im Wesentlichen unterhalb der Schmelztemperatur und eine Verfestigung, die das Entpacken erschwert wird im Wesentlichen vermieden. Ein Teilschmelzen wird so im Wesentlichen vermieden.

Vorzugsweise wird als Sinterlampe zweimal ein Infrarot-Halogenstrahler verwendet, die sich jedoch in der erzeugten Wellenlänge etwas unterscheiden. Der zweite Strahler wird dabei vorzugsweise einfach hinter den ersten Strahler angeordnet. Beide Strahler müssen dabei nicht immer gleichzeitig geschaltet werden, sondern können sich auch abwechseln, z.B. Strahler 1 bei Überfahrt von links nach rechts, dann Strahler 2 von rechts nach links, usw.

In einer bevorzugten Ausführungsform kann eine Wärmelampe in einer Weise aufgebaut sein, dass diese sowohl die Strahler zur Einstellung der Grundtemperatur im Bauraum enthält und auch die für den Verfestigungsprozess notwendigen Strahler, wobei diese wiederrum mindestens zwei unterschiedliche Wellenlängen oder - Bereiche abdecken können.

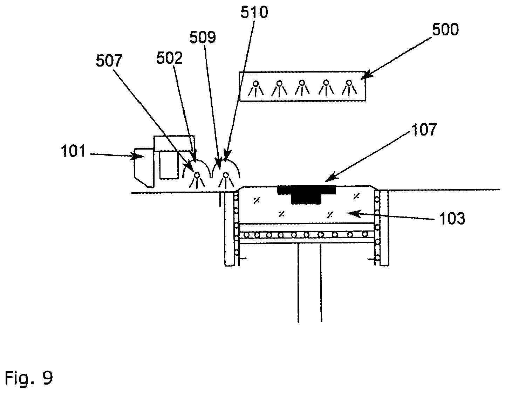

In einer bevorzugten Ausführung [Fig. 9] beinhaltet die Recoaterachse (Beschichter) einen zweiten Strahlungsemitter (509) mit Reflektor (510) auf der rechten Seite des ersten Emitters (507). Den zweiten Emitter kennzeichnet im Vergleich zum ersten ein anderes Strahlungsspektrum. Dies kann z.B. dadurch erreicht werden, dass ein Strahler mit 1kW Leistung und 350mm Länge ein Nahinfrarot-Spektrum mit Peakwellenlänge von 1µm besitzt, der zweite Strahler mit 1kW Leistung und 350mm Länge ein mittelwelliges Spektrum mit Peakwellenlänge 2µm. Dies ermöglicht eine getrennte Regelung der Aufheizraten von benetzem (107) und unbenetztem Pulver (103) - d.h. mit Absorber selektiv bedrucktem Partikelmaterial - während der Überfahrt mit der Recoaterachse, da das verwendete Partikelmaterial Strahlung bevorzugt im längerwelligen Infrarotbereich aufnimmt, benetztes Pulver bevorzugt im kürzerwelligen Bereich. Dabei ist eine Steuerung beider Aufheizraten auch durch Variation von Überfahrtgeschwindigkeit und Strahler-Leistung ebenfalls möglich. In einem weiteren Aspekt kann die Fahrgeschwindigkeit der Recoaterachse (101) zusätzlich einstellen, um so den Energieeintrag noch weiter zu regulieren und als Feinjustierung anzupassen. Eine gezielte Steuerung des emittierten Spektrums erreicht somit vorteilhaft, dass sich nunmehr das nicht mit Absorber bedruckte Partikelmaterial leichter vom Bauteil lösen lässt. Somit wird die Teilschmelzung von nicht mit Absorber bedrucktem Partikelmaterial vermindert oder ganz verhindert. Gleichzeitig wird sicher gestellt, dass die mit Absorber bedruckten Bereiche einen ausreichenden Energieeintrag erhalten, um ein Verschmelzen bzw. Verfestigen des Partikelmaterial mit guten Bauteileigenschaften zu erreichen. Vorzugsweise kann auch die Überfahrtgeschwindigkeit der Reacoaterachse zusätzlich eingestellt werden, um den Energieeintrag zu regulieren.

Weiterhin bevorzugt ist eine Kombination aus zwei Emittern mit kurzwelligem Spektrum, Peakwellenlänge 1,2µm und mittelwelligem Spektrum mit 2µm möglich, wobei je nach Richtung der Überfahrt der Recoaterachse über das Pulverbett sich vorzugsweise ein Emitter im abgeschaltetem Zustand befindet. Somit erfolgt die Sinter-Überfahrt mit Aktivierung beider Emitter, die Rückfahrt mit Aufbringung der nächsten Schicht Partikelmaterials bei abgeschaltetem kurzwelligem Strahler. Eine höhere Energieeffizient sowie eine höhere Sinterfahrtgeschwindigkeit sind somit vorteilhafter Weise erreichbar.

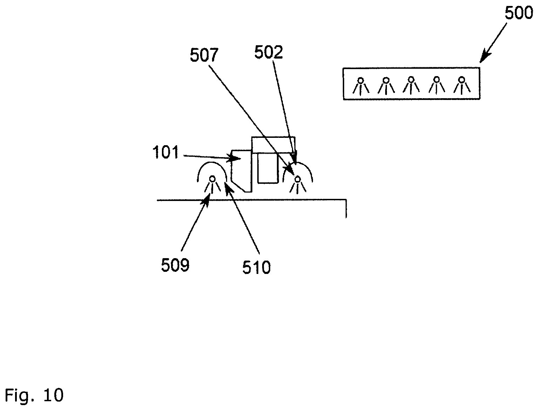

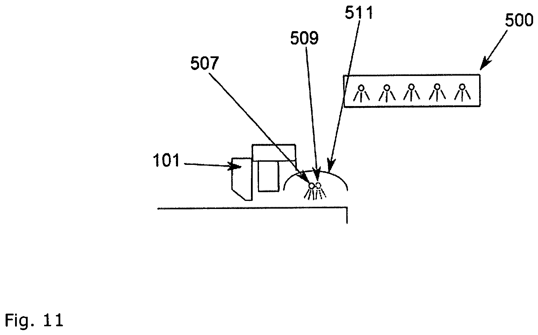

Vorzugsweise werden die Achssysteme in möglichst schmaler Ausführung zu konstruieren, da damit Abschattungseffekte der Pulveroberfläche von den Overhead-Heizelementen (Wärmelampe) möglichst gering gehalten werden können. Somit wird auch ein Auskühlen verhindert oder zuminderst vermindert. In einer bevorzugten Ausführungsform können beide Emittertypen innerhalb eines einzigen Quarzglaskolbens untergebracht werden [Fig. 11]. Auch eine Montage seitlich der Beschichtereinheit ist möglich, um Abschattungseffekte ausgleichen zu können [Fig. 10].

Die Verwendung von Emittern verschiedener Spektren im Overhead-Heizelement (500) ermöglicht reduzierte Leistungswerte der Emitter an Beschichter- bzw. Druckkopfeinheit und bietet somit den Vorteil der geringeren Hitzeentwicklung an den jeweiligen Einheiten, die dadurch in einem reduzierten Ausmaß gekühlt werden müssen.

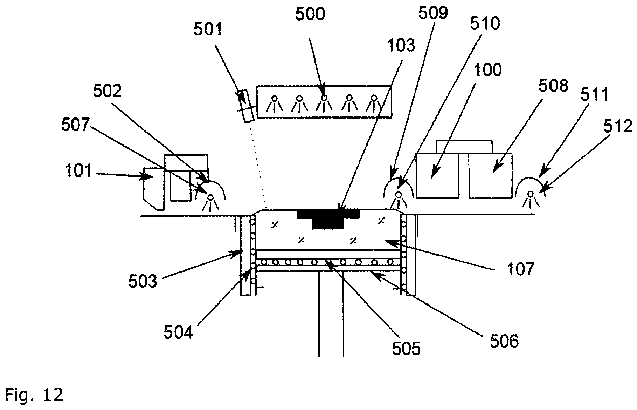

Eine weitere bevorzugte Ausführungsform kann darin bestehen, dass ein, vorzugsweise zwei Emitter mit unterschiedlichem Strahlungsspektrum zusätzlich an der Druckkopfachse angebracht werden [Fig. 12]. Dies hat den Vorteil, dass bei ausreichender Abschirmung der Pulveroberfläche, z.B. durch eine das Pulverbett überspannende metallische Rollbandabdeckung, das Overhead-Heizsystem vollständig entfallen kann. Somit ist nicht nur die Leistungsaufnahme dieses Aufbaus reduzierbar, die Pulveroberfläche kann durch Überfahrt beider Achssysteme auch gleichmäßiger temperiert werden, was Festigkeit und Formwiedergabe der durch das Verfahren erzeugten Bauteile zu Gute kommt.

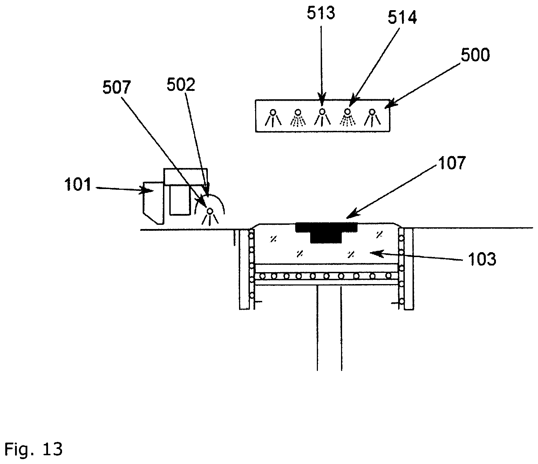

In einer weiteren bevorzugten Ausführungsform ist die Anbringung von Emittern verschiedener Wellenlängen ebenfalls am Overhead-Heizsystem möglich [Fig. 13]. Es entfallen somit vorteilhafter Weise Emitter an den Achssystemen vollständig, womit deren Fahrgeschwindigkeit aufgrund der nun geringeren Masse und Maße maximiert werden kann. Ausserdem wird so vorteilhaft die Abschattung der Pulveroberfläche von den Overhead-Heizelementen verkürzt, was eine Auskühlung der Oberfläche unterbindet. Der Aufbau in dieser bevorzugten Ausführungsform ist dadurch gekennzeichnet, dass zum Herstellen der Grundtemperatur der Pulveroberfläche Keramikheizelemente am Overhead-System zum Einsatz kommen, nach selektivem Bedrucken/Benetzen der Pulveroberfläche mit Absorber durch den Druckkopf jedoch Nahinfrarotstrahler im Overhead-Heizsystem für eine definierte Zeit von vorzugsweise 8sec. zusätzlich aktiviert werden und die Pulveroberfläche homogen ausleuchten. Dies führt nun zum Anschmelzen des Partikelmaterials der benetzen Oberfläche.

In einer bevorzugten Ausführungsform betrifft die Offenbarung eine Vorrichtung geeignet zum Durchführen eines Verfahrens wie oben beschrieben. Dabei können alle oben beschriebenen Merkmale in jeder Weise miteinander kombiniert werden. Bevorzugt ist eine Vorrichtung, die dadurch gekennzeichnet ist, dass sie folgende Merkmale aufweist:
ein am Schwingklingenrecoater (101) befindliches Heizelement (507) mit einer Peakwellenlänge von 0,3µm bis 3µm, bevorzugt von 0,7µm bis 2,5µm, besonders bevorzugt 0,9µm bis 1,4µm, vorzugsweise einen Reflektor (502), ein weiteres Heizelement (509), vorzugsweise mit Reflektor (510), vorzugsweise welches ein zu Heizelement (507) unterschiedliches Strahlungsspektrum von 1µm bis 3µm, bevorzugt 1,5µm bis 2,5µm, besonders bevorzugt 1,7µm bis 2,2µm aufweist, oder/und gleichzeitig zu Heizelement (507) mit einer dazu verschiedenen Leistung von 200W bis 2kW, bevorzugt von 350W bis 1,5kW, besonders bevorzugt von 400W bis 700W betrieben wird, oder/und sich neben dem ersten Heizelement auf der dem Bauraum zugewandten Seite befindet oder/und sich seitlich neben der Schwingklinge auf der dem Bauraum abgewandten Seite befindet oder/und sich zusammen mit dem ersten Heizelement unterhalb eines gemeinsamen Reflektors (511) befindet, oder/und in den Quarzglaskolben des ersten Heizelements eingearbeitet ist oder/und
ein weiteres Heizelement (510) mit Reflektor (509) befindlich an der linken, dem Bauraum zugewandten Seite der Druckkopfeinheit (100) oder/und ein weiteres Heizelement (512) mit Reflektor (511) an der rechten, dem Bauraum abgewandten Seite der Druckkopfeinheit (508)

Eine weitere bevorzugte Ausführungsform ist eine Vorrichtung umfassend ein weiteres Heizelement (514) mit zum ersten (513) verschiedenem Spektrum, befindlich an Overheadlampe (108) mit Peakwellenlänge von 0,3µm bis 3µm, bevorzugt von 0,7µm bis 2,5µm, besonders bevorzugt 0,9µm bis 1,4µm.

Der Vorteil zwei Strahler mit unterschiedlichen Strahlungsspektren zu verwenden liegt darin begründet, die Temperatur der unbenetzten Oberfläche des Auftrags (107) unabhängig von der Temperatur der benetzten (mit Absorber selektiv bedruckten Bereiche) Pulveroberfläche (103) zu steuern. Aus u.a. Fig. 9 wird die erfinderische Idee in einer bevorzugten Ausführungsform deutlich. Diese zeigt einen Infrarot-Halogen-Strahler (507) für die Belichtungsfahrt zu verwenden, dessen Strahlrichtung mittels eines Reflektors (502) auf die Pulverfläche (107) gerichtet wird, worauf sich die zuvor aufgebrachte zu belichtende Schicht (103) befindet, nun wird ein zweiter Strahler (509) mit Reflektor (510) eingesetzt, der sich jedoch vom emittierten Spektrum vom ersten Strahler (507) unterscheidet.

Im Folgenden sind nochmals bevorzugte Variationen der Offenbarung dargestellt:
**1)** Zwei Strahler mit unterschiedlichen Spektren.
   - Strahler 1 mit mittelwelligem Spektrum (Peakwellenlänge 1,6 µm), Strahler 2 mit Nahinfrarot-Spektrum (Peakwellenlänge 0,98 µm).
   - Strahler 1 mit mittelwelligem Spektrum (Peakwellenlänge 1,6 µm), Strahler 2 mit kurzwelligem Spektrum (Peakwellenlänge 1,2 µm).
   - Strahler 1 mit mittelwelligem Spektrum (Peakwellenlänge 1,6 µm), Strahler 2 mit langwelligem Spektrum (Peakwellenlänge 4,6 µm).
   - Strahler 1 mit langwelligem Spektrum (Peakwellenlänge 4,6 µm), Strahler 2 mit Nahinfrarot-Spektrum (Peakwellenlänge 0,98 µm).
   - Strahler 1 mit langwelligem Spektrum (Peakwellenlänge 4,6 µm), Strahler 2 mit kurzwelligem Spektrum (Peakwellenlänge 1,2 µm).
   - Strahler 1 mit kurzwelligem Spektrum (Peakwellenlänge 1,2 µm), Strahler 2 mit Nahinfrarot-Spektrum (Peakwellenlänge 0,98 µm).
**2)** Wie 1) aber beide Strahler vertauscht
**3)** Wie 1) aber ein Strahler-Spektrum mit Anteilen im UV-Bereich
**4)** Wie 1) wobei ein Strahler ein Keramikstrahler oder Quarzstrahler ist
**5)** Zwei identische Strahler, wobei ein Strahler mit einer geringeren Leistung betrieben wird, sodass sich dessen Spektrum zu größeren Wellenlängen hin verschiebt.
**6)** Zwei Strahler beliebigen Spektrums nach 1), über deren Leistungszufuhr jeweils das Spektrum angepasst wird.

Wie beschrieben kann das offenbarte Verfahren durch eine Variation in der zeitliche Abfolge einzelner Verfahrensschritte variieren und so vorteilhafte Verfahrensergebnisse erzielt werden:
**1)** Beide Strahler befinden sich während der Überfahrt über Pulveroberfläche (103) im angeschalteten Zustand
**2)** Nur ein Strahler, wahlweise (507) oder (509) befindet sich im eingeschalteten Zustand, der jeweils andere im ausgeschalteten während der Überfahrt, bei der die Belichtung stattfindet, nach Beispiel in Fig. 10. von links nach rechts.
**3)** Wie 2) jedoch bei der Beschichtungsfahrt, nach Beispiel in Fig. 10. von rechts nach links.
**4)** Wie 2) jedoch befindet sich bezüglich der Bewegungsrichtung der jeweils andere Strahler im angeschalteten Zustand.
**5)** wie 2) während einer Überfahrt befinden sich beide Strahler in ausgeschaltetem Zustand

In einem alternativen nicht erfindungsgemäßen Ausführungsform kann die der Anmeldung zugrunde liegende Aufgabe auch dadurch gelöst werden, dass die Temperaturfeinabstimmung bzw. die Temperaturoptimierung dadurch erreicht wird, dass Druckfluide mit vorteilhaftem Absorptionsspektrum eingesetzt werden, sodass mit diesem benetztes Partikelmaterial mittels eines definierten Infrarot-Emitterspektrums in möglichst optimiertem Ausmaß erwärmt werden kann. Dabei können unterschiedliche Druckflüssigkeiten (Absorber) selektiv verdruckt werden und somit eine verbesserte oder/und optimierte Erwärmung und Verfestigung des Bauteils sowie Bauteileigenschaften erreicht werden.

Das Druckfluid (Absorber) wird dabei vorteilhaft auf die Strahler abgestimmt und man kann in diesem Fall das Verfahren mit einem Overheadstrahler und einem Sinterstrahler fahren. Man kann ein, zwei oder drei verschieden Druckfluide gleichzeitig, hintereinander, alternierend, als Gemisch selektiv aufbringen. Das Druckfluid oder Druckfluidgemisch kann z.B. ein Absorptionsmaximum zwischen 750 und 900 nm, vorzugsweise 780 bis 850 nm, mehr bevorzugt von 815 nm aufweisen. Jedes Druckfluid kann ein anderes oben genanntes Absorptionsmaximum aufweisen.

Weitere Aspekte der Offenbarung werden im Folgenden ausgeführt.

Eine Aufgabenstellung, das Altern des Pulvers zu verhindern oder wirksam zu reduzieren, wird, wie beschrieben, vorzugsweise über das Eindrucken von Absorbern außerhalb des geometrischen Bereiches des eigentlichen Bauteils erreicht. Diese Maßnahme führt dazu, dass die Menge an Pulver, die mit hohen Temperaturen beaufschlagt wird, reduziert werden kann.

Die Alterung des Pulvers ist ein chemischer Prozess der laut Literatur unterschiedliche Mechanismen beinhaltet. Beispielsweise kann man für Polyamid 12 folgende Teilprozesse finden: Zum einen wirkt der Luftsauerstoff oxidativ und verändert das Basismaterial. Reaktive Gruppen werden dabei abgebunden und die Festigkeit kann sich nicht voll entwickeln. Zum zweiten wachsen die Ketten des Basispolymers. Dadurch steigt die Schmelzviskosität an und die Prozessierung kann nicht in der gleichen Weise, wie bei neuem Pulver, erfolgen. Als dritter Effekt wird eine gewisse Verringerung reaktiver Endgruppen angesehen. Diese erfolgt durch gegenseitige Reaktion von Polymerketten miteinander. Sie ist besonders für den Schichtverbund wichtig.

Allen Effekten gemeinsam ist die chemische Natur. Damit einher geht eine starke Temperaturabhängigkeit der Effekte. Hierbei kann die Reaktionsgeschwindigkeit bei einer Steigerung um 10°C durchaus das Doppelte erreichen. Damit kann leicht eingesehen werden, dass eine Temperatursenkung während des Prozesses um wenige Grad bereits eine massive Wirkung auf die Pulveralterung haben wird.

Das Verfahren nach dem Stand der Technik besteht aus den Schritten Schichterzeugen, Bedrucken, Belichten mit Strahlung und Absenken. Der erste Schritt ist analog zur Schichtbildung beim bekannten pulverbasierten-3D-Drucken. Pulver wird vor eine Klinge gebracht, auf eine Bauplattform aufgebracht und mit der Klinge glattgestrichen. Die Positionen der Bauplattform bei zwei aufeinanderfolgenden Beschichtungsvorgängen bestimmt dabei die Schichtstärke.

Im Anschluss wird die Schicht bedruckt. Beim hier genannten Verfahren werden Flüssigkeiten mit einem Tintenstrahldruckkopf aufgebracht. Ein Teil der Flüssigkeit ist ein Absorber, der bei Einwirkung einer Strahlung lokal eine Erwärmung des Pulvers verursacht. Alternativ kann der Absorber auch ein Pulver, vorzugsweise ein Carbontoner, sein, das in geeigneter Weise selektiv aufgebracht wird.

Die so bedruckte Schicht wird jetzt mit einer Strahlungsquelle überstrichen und damit selektiv erwärmt. Dabei wird das komplette Pulver von der Strahlungsquelle erhitzt. Besonders aber in aktivierten Bereichen steigt die Temperatur derart an, dass die Partikel beginnen, zu sintern und sich damit zu verbinden.

Nach diesem Schritt wird das Baufeld um eine Schichtstärke abgesenkt. Dann werden alle oben genannten Schritte wiederholt bis das gewünschte Bauteil entstanden ist.

Zusätzlich zur Strahlungsquelle die das Baufeld überstreicht, ist vorzugsweise eine zusätzliche stationäre Strahlungsquelle oberhalb des Baufeldes vorhanden. Sie wirkt jeweils, wenn das Baufeld nicht durch ein Aggregat, wie dem Beschichter oder dem Druckkopf, abgedeckt wird. Diese sogenannte Overheadlampe wird bevorzugt geregelt, sodass sich eine konstante Temperatur auf dem Baufeld einstellt. Beispielsweise kann ein Pyrometersensor verwendet werden, um den Temperatur-Istwert zu bestimmen. Die Overheadlampe stellt in einer solchen Anordnung die zentrale Temperaturregelungskomponente dar.

Das Baufeld wird auf einer Temperatur nahe der Sintertemperatur gehalten. Zu einen ist dann die Zusatzenergie zu Sinterung des Pulvers gering und kann durch sanft wirkende Mittel eingebracht werden. Zum anderen ist die das Bauteil umgebende Temperatur so hoch, dass während des fortschreitenden Bauprozesses auch in den Randbereichen des Bauteils die Temperatur nicht unter die Rekristallisationstemperatur fällt und somit die Schichtbildung gestört würde.

Im Gegensatz zum Lasersintern ist es beim HSS-Prozess keine zwingende Bedingung das Pulver nahe der Sintertemperatur zu halten. Durch die Strahlungsquelle in Verbindung mit dem Absorber kann eine große Energiemenge selektiv eingebracht werden. Deshalb ist es bei diesem Prozess nur notwendig, das das Bauteil umgebende Pulver auf einer Temperatur nahe der Sintertemperatur zu halten, um eine zu rasche Abkühlung des Bauteils nach dem Energieeintrag zu verhindern.

Diese Wirkung kann auch über ein Eindrucken von Absorber außerhalb des Bauteils erfolgen. Damit wird ein Bereich erzeugt, der zum einen nahe an die Sintertemperatur aufgeheizt ist und zum anderen so niedrig temperiert ist, dass in diesem Bereich das Pulver nicht sintert.

Für diesen Prozess sind relativ zu den verwendeten Energien und Schichtzeiten niedrige Wärmeleitfähigkeiten und hohe Wärmekapazitäten erforderlich. Damit ist gewährleistet, dass der Bereich außerhalb des Bauteils nicht zu schnell auskühlt. Viele Polymere, die im Bereich Sintern eingesetzt werden, erfüllen die oben genannten Vorrausetzungen.

Im Verfahren nach dem Stand der Technik wird das gesamte Pulver auf eine Temperatur nahe der Sintertemperatur erhitzt. Der Energieaustausch zum unbedruckten Bereich ist getrieben durch die Temperaturdifferenz von wenigen Grad Celsius. Damit erfolgt das Auskühlen zeitlich, wenn schon viele Schichten im Pulverbett übereinander gebaut sind.

Das offenbarte Verfahren kann bei gleicher Sinterung mit wesentlich geringerer Temperatur erfolgen. Die Parameter sind die relative Menge des Absorbers und die Breite des "Mantels" um das Bauteil. Die Temperaturregelung erfolgt über die geregelte Overheadlampe.

Die Einstellung der Eintragsmenge kann einerseits über die Auflösung des Drucks erfolgen. Diese kann, wenn nur ein Absorber und ein Druckkopf eingesetzt wird, z.B. über ein mehrfaches Überfahren eingestellt werden. Dabei wird z.B. in einem ersten Schritt der Bauteilquerschnitt bedruckt. In der zweiten Überfahrt kann mit angepasster Auflösung der Mantel gedruckt werden. Dieses Vorgehen erfordert zwei Überfahrten und ist deshalb nicht optimal für die Verfahrensgeschwindigkeit.

Ebenso können auch in einer Überfahrt beide Druckaufgaben erledigt werden. Besonders einfach ist ein Abschwächen der gedruckten Bilder im Bereich des Mantels durch das sogenannte Dithering. Hierbei können verschiedene mathematische Algorithmen verwendet werden, um die bedruckten Punkte so zu verteilen, dass die Wärmewirkung im Mantel das gewünschte Niveau erreicht. Technisch aufwändiger ist die Nutzung von graustufenfähigen Tintenstrahldruckköpfen. Hierbei ist eine wählbare Einstellung der Tropfenmasse während des Drucks möglich.

Besonders günstige Eigenschaften können auch erzielt werden, wenn ein separater Auftrag eines vom Absorber im Bauteil unterschiedlichen Absorbers erfolgt. Dabei ist es im Allgemeinen erforderlich einen zweiten Druckkopf zu verwenden.

Der zweite Druckkopf kann mit dem Ersten mitbewegt werden. Auch können verschiedene Module in einem Druckkopf verbaut sein. Je nach chemischer Zusammensetzung müssen Mittel vorhanden sein, um die beiden Flüssigkeiten voneinander zu trennen. Dies betrifft besonders den Druckkopfreinigungsvorgang.

Durch den Einsatz des zweiten flüssigen Mediums kann die Wirkung besonders gezielt eingestellt werden. Die betrifft zum einen die Wärmewirkung. Hierbei kann beispielsweise über die relative Absorbermenge die notwendige Eintragsmenge beeinflusst werden. Dies kann technische Vorteile bezüglich der Auflösung und der relativen Tropfenmasse bieten.

Ebenso können im Randbereich gezielte Veränderungen des Sinterverhaltens erfolgen. So kann beispielsweise ein Trennmittel eingebracht werden, das ein Sintern stark verzögert. Damit werden Anhaftungen am Bauteil vermieden und das Entpacken der Bauteile wird somit erleichtert.

Dieser Effekt kann sogar soweit übersteigert werden, dass die Temperatur des Mantels über der des Bauteils liegt. Damit kann im Randbereich des eigentlichen Bauteils eine zusätzliche Sinterung erzielt werden. Die Verformung durch Abkühlung kann somit noch besser verhindert werden.

Die zur Ausführung der Erfindung notwendige Vorrichtung ist eng an einen 3D-Drucker für das pulverbasierte Drucken angelehnt. Zusätzlich werden weitere Prozesseinheiten für das Temperieren und das Eindrucken der Prozessflüssigkeiten eingesetzt.

Zu Beginn des Verfahrens wird die gesamte Vorrichtung aufgeheizt. Dazu werden alle Heizelemente zur Steigerung der Temperatur benutzt. Die Aufheizphase ist abgeschlossen, wenn die Temperatur an allen Messstellen des Systems konstant bleibt.

Die einzelnen Heizsysteme einer bevorzugten Ausführung der Erfindung werden im Folgenden aufgeführt:
Die Bauplattform (102), auf der das Pulver im Prozess abgelegt wird und mit deren Hilfe die Schichtstärke der Schichten (107) eingestellt wird, kann über verschiedene Systeme beheizt werden. In einer bevorzugten Ausführung kommt eine elektrische Widerstandsheizung (504) zum Einsatz. Diese wird ebenso bevorzugt, auf Grund von Überlegungen zur Homogenität der Heizwirkung als flächige Heizfolie ausgeführt. Die Wirkung dieser Heizung wird über einen Sensor erfasst und geregelt. Der Sensor ist direkt mit der Bauplattform verbunden. Diese selbst ist zielführend aus Metall, vorzugsweise Aluminium, hergestellt. Eine Isolierung (506) deckt die Bauplattform (102) nach unten ab.

Ebenso kann die Bauplattform durch ein Fluid erhitzt werden. Dazu sind unterhalb der bevorzugt metallischen Bauplattform Heizwendeln (504) verbaut. Wiederum unterhalb befindet sich eine Isolierung (506) zur Homogenisierung der Heizwirkung.

Die Heizwendeln werden beispielsweise von einem Temperieröl durchströmt. Die Vorwahl der Öltemperatur ermöglicht eine exakte Einstellung der Temperatur. Ist der Durchfluss hoch genug und die Leistung angepasst, kann auf diese Weise eine sehr exakte Regelung der Temperatur erzielt werden.

Die Bauplattform (102) wird im sogenannten Baubehälter (110) bewegt. Dieser ist je nach Ausführung der 3D-Druck Vorrichtung aus dieser entnehmbar. Dadurch kann ein hoher zeitlicher Maschinennutzungsgrad erzielt werden, da während des Entpackens der Bauteile ein zweiter Baubehälter in der Vorrichtung verwendet werden kann.

Der Baubehälter (110) wird ebenso erhitzt. Es können die gleichen Techniken, wie für die Bauplattform verwendet werden. Der Behälter selbst ist bevorzugt wieder aus Metall ausgeführt, für eine gute Wärmeleitung bevorzugt aus Aluminium. Die eigentlich aktive Heizung (504) ist wieder mit einer Isolierung (503) hinterlegt. Damit kann die Wirkung gesteigert werden und die Homogenität erhöht werden.

Zwischen der Vorrichtung und dem Baubehälter gibt es zur Leistungsanbindung, bevorzugt ein Stecksystem. Dies kann eine elektrische Verbindung beinhalten oder Steckverbinder für Flüssigkeit.

Das nächste wesentliche Heizsystem einer offenbarten Vorrichtung ist die Overheadlampe (108). Sie ist bevorzugt oberhalb des Baufeldes angebracht und strahlt senkrecht auf das Baufeld. Ebenso bevorzugt sind seitlich angebrachte Strahler, die in einem gewissen Winkel auf das Baufeld strahlen. Eine solche Konstruktion wird bevorzugt um die Abschattung durch den Beschichter oder den Druckkopf zu minimieren.

Die Overheadlampe (108) ist bevorzugt mit Infrarotstrahlern (500) ausgestattet. Diese können Quarzglaslampen oder Keramikstrahler sein. Die Auswahl wird je nach gewähltem Absorber und der verfahrensbedingt besten Kombination passend zur Wellenlänge gewählt.

Verfahrensbedingt günstig ist es die Overheadlampe (108) geregelt zu betreiben. Dazu kann bevorzugt ein Pyrometer (501) als Sensor verwendet werden. Das Pyrometer wird auf einen - durch die Steuerung sichergestellt nicht mit Absorber bedruckten Randbereich - des Baufeldes gerichtet.

Das eigentliche Sintern wird in einer bevorzugten Ausführung der Erfindung durch eine mit dem Beschichter mitgeführte Infrarotlampe (109) ausgeführt. Diese erwärmt das Baufeld während des Überfahrens. Sie kann verwendet werden, um das frisch bedruckte Pulver oder eine bereits überdeckte Pulverschicht zu erwärmen. Auf Grund der notwenigen Temperaturdynamik wird hier bevorzugt ein Quarzstrahler verwendet.

Das Pulver wird in einer bevorzugten Ausführung der Vorrichtung vor dem Aufbringen auf die schon bestehende Pulveroberfläche vorgewärmt, damit die Schicht nicht zu stark abgekühlt wird. Für diese Pulvervorwärmung eignet sich ebenso eine elektrische Widerstandsheizung im Beschichter.

Grundsätzlich können alle Aggregate auch indirekt über Infrarotstrahlung erwärmt werden. Besonders bevorzugt wird der Beschichter mit Strahlung erwärmt, wenn starke Vibrationen auftreten.

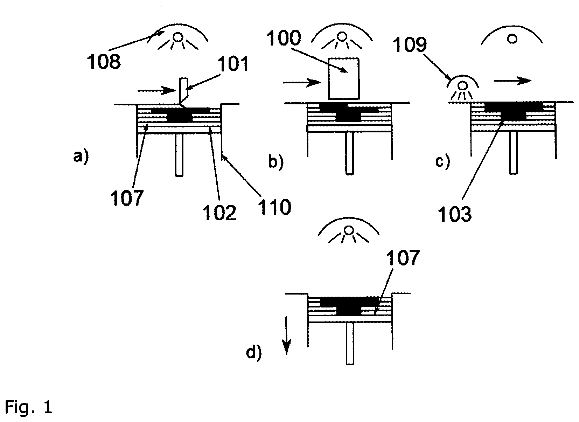

Bevorzugt wird mit der Vorrichtung nach der Aufheizphase folgende Reihenfolge von Verfahrensschritten realisiert: Auf der Bauplattform wird eine Pulverschicht vom Beschichter (101) erzeugt (Fig. 1a). Optional kann die neue Schicht je nach Bauform der Maschine dabei zusätzlich mit der Sinterlampe (109) erhitzt werden. Im Anschluss wird diese Schicht von einem (100) oder mehreren Tintenstrahldruckköpfen (100 und 508) (Fig 1b) bedruckt. Dann wird die Bauplattform (102) abgesenkt (1d). Nun wird die bedruckte Schicht mit der Sinterlampe (109) aufgewärmt und anschließend wieder mit Pulver abgedeckt.

Dieser Vorgang wird solange wiederholt, bis die Bauteile (103) im Baubehälter (110) fertig gestellt sind. Im Anschluss folgt die Abkühlphase. Diese findet bevorzugt im Baubehälter statt, der dann außerhalb der Vorrichtung mit Energie versorgt wird.

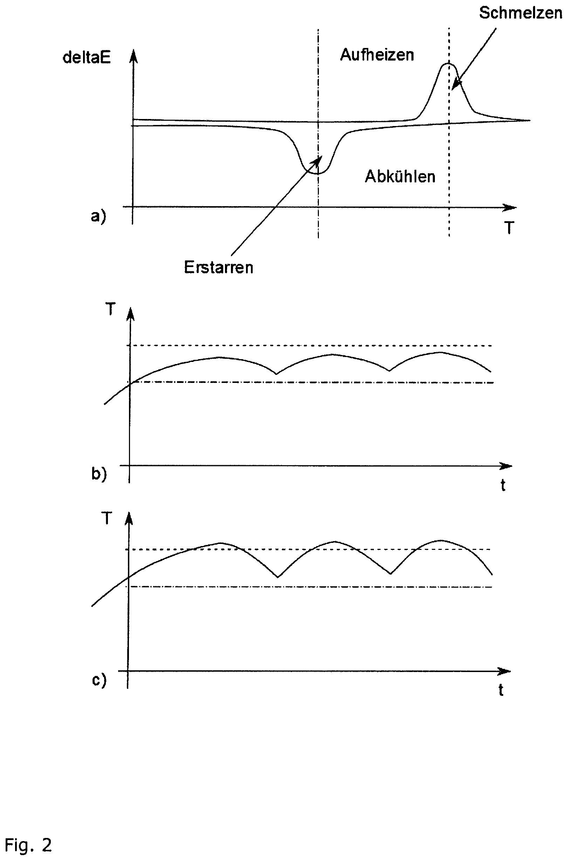

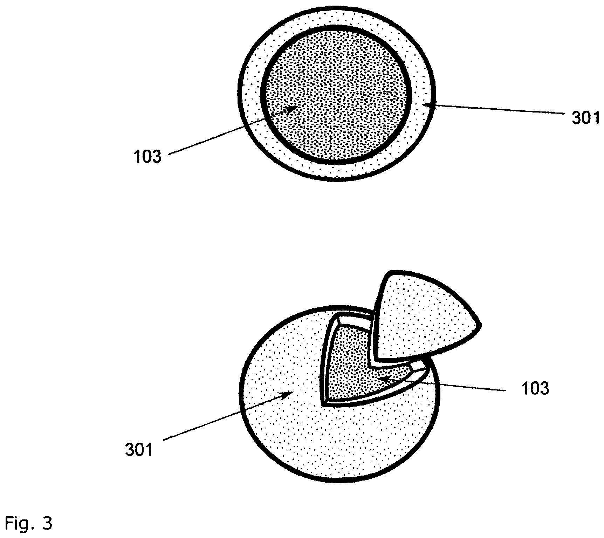

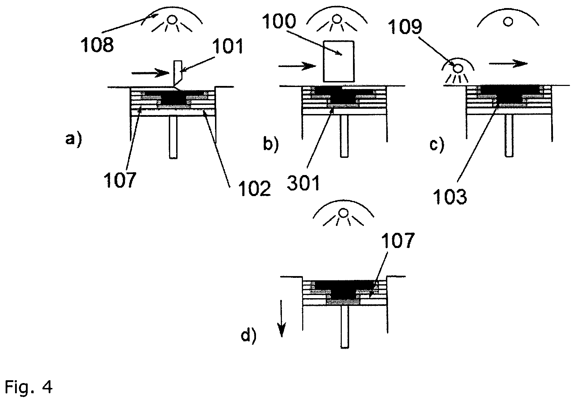

Fig. 2 gibt Temperaturdiagramme wieder. Dabei zeigt Figur 2a schematisch den Verlauf der vom Pulver abgegebenen Energie, wenn es in einem Zyklus erhitzt und wieder abkühlt wird. Bei der Aufheizung zeigt sich bei einer gewissen Temperatur eine starke Aufnahme von Energie. Hier schmilzt oder sintert das Material (Sintertemperatur). Für lasersintergeeignetes Polyamid 12 liegt diese Temperatur bei ca. 185°C. Bei der Abkühlung gibt es ebenfalls eine signifikante Stelle wesentlich unterhalb der Sintertemperatur (Rekristallisationstemperatur). Hier erstarrt das geschmolzene Material.
Den Verlauf von den Temperaturen während eines Prozesslaufes nach einem Verfahren gemäß dem Stand der Technik geben die Figuren 2b und 2c wieder. Figur 2b zeigt dabei den Verlauf der Temperatur auf der unbedruckten Fläche. Durch den Einsatz der Sinterstrahlungsquelle entstehen im eigentlich konstanten Verlauf Aufheiz- und Abkühlphasen. Im unbedruckten Bereich erreicht die Temperatur niemals die Sintertemperatur.
Figur 2c zeigt den Verlauf im bedruckten Bereich. Hier sind die Schwankungen stärker. Der Prozess wird mindestens so geführt, dass kurzzeitig die Sintertemperatur überschritten wird und so ein Teil des Pulvers aufgeschmolzen wird und aufgeschmolzen bleibt. Wird zu stark erhitzt, schmilzt sämtliches Pulver in diesem Bereich und es kommt zu massiven Verzug. Eine zu starke Abkühlung des bedruckten Bereiches muss ebenfalls vermieden werden, da sonst die Rekristallisation einsetzt und dann sämtliche Schwindungen auf Grund der jetzt möglichen Kraftübertragung zu einem geometrischen Verzug (Curling) führen, der unter Umständen den weiteren Prozess unmöglich macht.

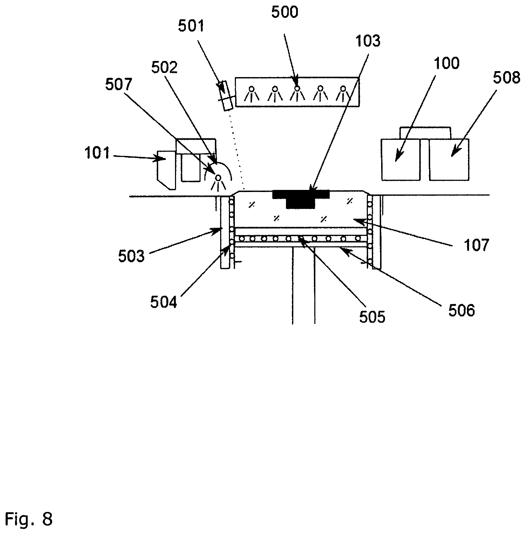

Figur 8 beschreibt eine vorteilhafte Kombination von Bauelementen mit denen die erfindungsgemäß vorteilhaften Verfahrensbedingungen erreicht werden können. Weitere Einzelheiten hierzu sind in Ausführungsbeispiel 4 veranschaulicht.
   In den weiteren Figuren ist der Aspekt von mindestens zwei Sinterlampen bzw. von mindestens zwei Emittertypen in einer Sinterlampe oder Wärmelampe dargestellt.
Fig. 9 zeigt einen Aufbau, wobei zusätzlich zu Heizelement (507) mit Reflektor (502) ein weiteres Heizelement (509) mit Reflektor (510) unterschiedlichen Strahlungsspektrums zum Einsatz kommt.
Fig. 10 zeigt eine zweite Variante des Aufbaus, wobei sich das zweite Heizelement auf links neben der Schwingklinge befindet.
Fig. 11 zeigt einen Aufbau, wobei beide Heizelemente unterschiedlichen Spektrums in gemeinsam montiert sind, vorzugsweise innerhalb eines Quarzglaskolbens.
Fig. 12 zeigt einen Aufbau, wobei weitere Heizelemente, wahlweise unterschiedlicher Peakwellenlänge am Druckkopfachssystem montiert sind.
Fig. 13 zeigt einen Aufbau, wobei das Overhead-Heizaggregat einen zusätzlichen Emittertyp aufweist, der sich im ausgesandten Spektrum vom ersten unterscheidet.

### Beispiele

### Beispiel 1: Vorrichtung mit einem Tintenstrahldruckkopf mit binärer Tropfengröße

Die im 3D-Druck üblichen Tintenstrahlköpfe geben auf einem Punkt im Raster der Druckfläche einen Tropfen ab. Die Größe dieses Tropfens wird einmalig eingestellt.

Im Verfahren wird während des Druckens jeweils ein für diese Bauhöhe angepasstes Querschnittsbild der gewünschten Baukörper (103) aus Absorber aufgedruckt. Dabei wird dieses Bild in einer solchen Intensität aufgedruckt, dass es bei der Überfahrt der Sinterlampe zu einer sicheren Sinterung der Partikel kommt. Dabei bleiben wie oben beschrieben unbedruckte Bereiche ungesintert. Diese Menge der dazu notwendigen, pro Rasterpunkt eingedruckten Flüssigkeit wird im Folgenden als Schwarz aufgefasst.

Rund um das Bauteil herum wird während des Prozesses ein Mantel (301) gedruckt, der einen Grauwert darstellt, also im lokalen Mittel weniger Absorber enthält. Der Mantel (301) wird, bevorzugt, während der Schichtberechnung aus den Ausgangsdaten ermittelt. Dabei wird, beispielsweise beim Dateiformat .stl, die Mantelfläche durch einen Offset der Dreiecksflächen erzeugt.

Der Grauwert kann in der Rasterfläche durch mathematische Verfahren realisiert werden. Dazu wird die Belegung der Mantelfläche mit bedruckten Punkten so gesteuert, dass in einer gewissen lokalen Betrachtungsfläche im Mittelwert der gewünschte Grauwert erzielt wird. Ein Beispiel für ein solches mathematisches Verfahren ist das sogenannte Fehlerdiffusionsverfahren. Hier wird von einer Fläche zur Mittelung ausgegangen und die entsprechenden Rasterpunkte je nach Grauwert gesetzt. In einem einfachen Beispiel mit einer Fläche von 10 mal 10 Punkten müssen für einen Grauwert von 30% 30 Punkte mit dem Wert "Schwarz" belegt werden und 70 Punkt unbedruckt bleiben.

Wird dieses Verfahren verwendet, reicht ein herkömmlicher Druckkopf (100) aus. Die Vorrichtung unterscheidet sich nicht von den Vorrichtungen des Standes der Technik. Auch können die gleichen Datenpfade realisiert werden, da die Information in einer einzigen einfarbigen Rasterbitmap gespeichert werden kann.

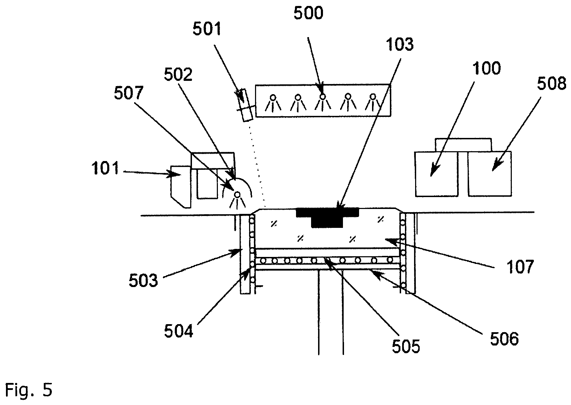

Die oben geschilderten Temperaturkurven müssen jetzt in drei Bereichen auf dem Baufeld betrachtet werden: Im Bauteilbereich (103) gelten die gleichen Verhältnisse wie in Fig. 2b dargestellt. Jeweils kurz wird dort die Temperatur über die Sintertemperatur gesteigert. Abweichend davon zeigt Fig. 5a die Temperatur im unbedruckten Bereich. Sie kann sogar deutlich unterhalb der Rekristallisationstemperatur liegen, da der Randbereich (301) nicht über die Sintertemperatur gebracht wird und somit keine Kraftübertragung ermöglicht. Der Verlauf in Fig. 6a gibt die Temperatur im Randbereich (301) des Bauteils wieder. Hier sollte man über der Rekristallisationstemperatur und unter der Sintertemperatur liegen, damit der Bauteilbereich durch den Wärmeübergang nicht unter die Rekristallisationstemperatur fallen kann und der Bereich nach dem Bauprozess leicht entfernt werden kann.

### Beispiel 2: Graustufenfähiger Druckkopf

Präziser in der Anwendung ist eine Vorrichtung mit einem graustufenfähigen Druckkopf. Diese Druckköpfe sind im Bereich von Printmedien verbreitet und bekannt. Damit kann in diesem Bereich die scheinbare Auflösung erhöht werden und somit eine bessere Bildqualität erzielt werden.

Im Bereich 3D-Druck kann diese Auflösungserhöhung direkt nicht wirksam werden. Es kann aber die Technik genutzt werden, um die Bereiche Bauteil (103) und Mantel (301) mit verschiedenen Flüssigkeitseinträgen zu belegen. Somit kann z.B. ein Eintragswert von 50% im Mantelbereich bezogen auf die Menge im Bauteilbereich eingestellt werden. Die Datenübertragung erfolgt, indem eine mehrfarbige Rasterbitmap verwendet wird. Minimal kann man eine weitere Rasterbitmap definieren, die die Daten für den Randbereich bereithält. Die Druckkopfelektronik wertet dann die jeweiligen Bits als Graustufeninformation.

### Beispiel 3: Materialsystem mit einem Trennmittel

Weitere wesentliche Freiheitsgrade ergeben sich, wenn mehrere unterschiedliche Flüssigkeiten verdruckt werden.

Dazu muss die Vorrichtung erweitert werden. Es kommt ein zweiter Druckkopf (508) zum Einsatz, der den zweiten Absorber verdrucken kann. Dabei muss der Datenpfad in der Steuerung der Maschine nicht geändert werden. Die Daten werden elektronisch vor dem jeweiligen Druckkopf aufgeteilt. Dieser Druckkopf muss nicht diskret physikalisch vorhanden sein, sondern kann ein Teil des Druckkopfes (100) der Vorrichtung sein.

Die zweite Absorberflüssigkeit kann beispielsweise ein Öl enthalten, das als Trennmittel dient. Dieses Trennmittel setzt sich zwischen die einzelnen Partikel und verhindert den Kontakt des geschmolzenen Basismaterials. Im Fall von Polyamid 12 als Basismaterial kann ein bestimmter Anteil von Silikonöl in der Druckflüssigkeit als Trennmittel dienen. Dieses Öl muss in Suspension mit der restlichen Tinte, die zusätzlich den Absorber trägt, gehalten werden.

Eine beispielhafte Zusammensetzung ist:
- 80% Propylenglykol
- 14% Polyethylenglykol 400
- 5% Nanoskaliges Graphit
- 1% Emulgator

Da das Öl einen hohen Siedepunkt aufweist, verdampft es beim Sintervorgang nicht. Im Mantelbereich (301) können die Partikel nicht versintern. Das Öl erzeugt jedoch eine am Bauteil anhaftende Randschicht, die beim Entpacken der Bauteile leicht entfernt werden kann. Diese kann separat vom restlichen Pulver entfernt werden. So kann eine starke Kontamination des Pulvers bei weiteren Durchläufen vermieden werden.

Diese Flüssigkeit wird im Randbereich (301) in der gleichen Menge eingedruckt wie die Flüssigkeit im Bauteilbereich (103). Die Flüssigkeit im Bauteilbereich (103) setzt sich bei diesem Beispiel aus:
- 95% Propylenglykol
- 5% Nanoskaliges Graphit
zusammen.

### Beispiel 4: Eine vorteilhafte Kombination von konstruktiven Merkmalen

1) Eine Anordnung bestehend aus 6 Stück Wärmestrahlung emittierender Elemente des Typs FTE Ceramicx auf Keramikbasis mit einem Wellenlängenmaximum von 5 µm, montiert mit einem Abstand von 175 mm über einer Bauplattform der Größe 330 x 230 mm, im Detail Elemente mit einer Grundleistung von 300 Watt und einer Größe von jeweils 245 x 60 x 31 mm, betrieben mit einer Leistung von 50%. Die Anordnung sorgt für eine konstante Basistemperatur des unbehandelten Pulvers von 175°C auf der Oberfläche. Die Elemente sind dabei derart montiert, dass sie sich mittig über dem Rand der Bauplattform befinden und somit die Homogenität der Temperatur über die gesamte Fläche des auf der Bauplattform befindlichen Pulvers gewährleistet ist und die Ränder der Bauplattform nicht auskühlen.
2) Eine auf Silikon basierende Heizmatte mit maximaler Leistung 400 W, flächig montiert an der Unterseite der Bauplattform, geregelt auf eine konstante Temperatur von 175°C; diese dient dazu die Basistemperatur des Pulverauftrags homogen zu erreichen und über die Zeit konstant zu halten.
3) Ein Halogen-Wärmestrahler des Typs QHM, Hersteller Freek GmbH, mit Maximalleistung von 1,6 kW und Wellenlängenmaximum von 1 µm, montiert an der Rückseite des Schwingklingenrecoaters mit Abstand von 55 mm über der Pulverschicht. Die Leistung des Strahlers wird abhängig von dessen Position während der Überfahrt über dem Pulverauftrag geändert. 1,5 kW während der Überfahrt des mit einer Infrarotlicht absorbierenden Flüssigkeit benetzten Pulvers, um dessen Temperatur über die Schmelztemperatur, hier ca. 200°C, zu erhöhen, 0,3 kW während des Auftragens der nächsten Schicht, um diese vor dem Auskühlen zu bewahren, im ausgeschalteten Zustand sonst.
4) Ein weiterer Keramikstrahler des Typs FTE Ceramicx mit identischer Größe dient der Vorheizung des Reservoirs des Schwingklingenrecoaters, indem sich Polyamidpulver für den Schichtauftrag befindet. Das Pulver erfährt somit eine Temperierung auf 70°C. Somit kann Temperatur und Fließfähigkeit des Pulvers über den gesamten Bauprozess konstant gehalten werden. Eine Temperatur unterhalb des Glasübergangs garantiert weiterhin eine konstante Fließfähigkeit, womit ein reibungsloser Pulverauftrag mittels des Schwingklingenrecoaters gewährleistet ist.
5) Der Aufbau besitzt zwei Achssysteme, die mit jeweils einem Antrieb ausgestattet sind und die Bauplattform mit dem Pulverauftrag überfahren können. Eine Achse, deren Ruheposition sich seitlich, hier links, der Bauplattform befindet, beinhaltet den Schwingklingenrecoater auf der linken Seite, sowie den Halogenstrahler auf der rechten, der dem Schwingklingenrecoater abgewandten Seite. Die zweite Achse beinhaltet den Druckkopf, der außerdem senkrecht zum Achssystem bewegt werden kann, um ein streifenweises Bedrucken der gesamten Pulveroberfläche zu gewährleisten. Der zyklische Ablauf des schichtweisen Druckprozesses gliedert sich dabei wie folgt:
   1) Fahrt der Recoaterachse über die Bauplattform = Sinterfahrt. Lampenleistung dabei 1,5 kW, Geschwindigkeit 60 mm/s.
   2)Absenken der Bauplattform um die Schichthöhe 150 µm
   3)Fahrt der Recoaterachse über die Bauplattform zurück in die Ruheposition; dabei erfolgt Schichtauftrag mittels aktiviertem Schwingklingenrecoater. Lampenleistung hierbei 0,3 kW, Geschwindigkeit 40 mm/s = Recoating- und Anheizfahrt
   4)Fahrt der Druckkopfachse über die Bauplattform in die Druck-Startposition.
   5)Fahrt der Druckkopfachse zurück in die Ruheposition. Dabei erfolgt Aktivierung des Druckkopfes Typ 1001, Hersteller XAAR, und somit Benetzung der Pulveroberfläche an den gewünschten Stellen mit Absorber.
6) Das bei der Benetzung der Pulveroberfläche zur Anwendung kommende Fluid besteht aus einer handelsüblichen ölbasierten Rußpartikeltinte, z.B. IK821 des Herstellers XAAR, deren Absorptionsmaxima sich außerhalb der von den Keramik-Wärmestrahlern emittierten Wellenlängen befindet und deshalb in genau gleichem Maße erwärmt wird wie das unbenetzte Pulver. Da die Absorption des Druckfluids bei Wellenlängen kleiner 2 µm stark ansteigt, werden die Emissionen des Halogenwärmestrahlers vom Fluid benetzten Pulver in einem wesentlich größeren Faktor aufgenommen, als von unbenetztem Pulver, da dieses im Wellenlängenbereich von kleiner 2 µm nahezu vollständig reflektiert. Die dennoch aufgenommene Energie des Strahlers der unbenetzten Stellen dient der Aufrechterhaltung der Basistemperatur der Pulveroberfläche.

### Beispiel 5: Verwendung von Druckfluid mit vorteilhaftem Absorptionsspektrum

Eine weitere Möglichkeit die Selektivität des Aufbauprozesses zu steigern und somit sowohl Festigkeit der zu erzeugenden Strukturen als auch gleichzeitig die Entfernbarkeit unbenetzen Partikelmaterials zu maximieren besteht darin, Druckfluide mit vorteilhaftem Absorptionsspektrum einzusetzen, sodass mit diesem benetztes Partikelmaterial mittels eines definierten Infrarot-Emitterspektrums in möglichst großem Ausmaß erwärmt werden kann. Bevorzugt wird ein Druckfluid ausgewählt, dessen Absorptionsspektrum sich vom verwendeten Partikelmaterial stark unterscheidet. Eine Verfeinerung der Steuerung sowohl der Grundtemperatur der Pulveroberfläche als auch der Anschmelztemperatur der benetzten Oberfläche ist somit ermöglicht, ohne den konstruktiven Aufwand speziell auf idealen Spektrums maßgefertigter Infrarot-Strahler auf sich nehmen zu müssen.

Es wird offenbart:
- Druckfluid auf Basis von [C47 H47 Cl N2 O3 S] (CAS # 134127-48-3) mit einem Absorptionsmaximum von 815 nm, gelöst in Methanol, beispielsweise ADS830AT des Herstellers American Dye Source
- Infrarot-Emitter in Form von handelsüblichen Quarz-Halogen-Strahlern mit einer Peakwellenlänge von 0,9 - 1,2 µm, bevorzugt als Sinterlampe
- Infrarot-Emitter in Form von Carbon Infrarot-Strahler mit einer Peakwellenlänge von 1,9 - 2,7 µm, bevorzugt als Overhead-Heizstrahler oder/und zusätzlichen Sinterstrahlers, beispielweise des Herstellers Heraeus Noblelight.

Vorteilhaft hierbei gestaltet sich das Austauschen der Overhead-Keramikstrahler durch Carbon Infrarotstrahler deshalb, da diese eine kürzere Reaktionszeit aufweisen, was die Prozesstemperatur-Steuerung vereinfacht.

## Patentansprüche

1. Verfahren zum Herstellen von 3D-Formteilen, wobei partikelförmiges Baumaterial in einer definierten Schicht mittels Beschichter auf ein Baufeld aufgetragen wird, selektiv eine oder mehrere Flüssigkeiten oder Partikelmaterial eines oder mehrerer Absorber aufgebracht werden, diese Schicht durch einen ersten Aufheizschritt auf eine Basistemperatur des Pulvers ohne Absorber, welches sich innerhalb des Sinterfensters des Polyamidpulvers befindet, erwärmt wird und ein zweiter Sinterschritt durch Wärmezufuhr zu einer selektiven Verfestigung der mit Absorber bedruckten Bereiche bei einer Sintertemperatur oberhalb der Schmelztemperatur des Pulvers führt, wobei die Bereiche mit selektiv aufgebrachtem Absorber im ersten Schritt stärker erhitzen als die Bereiche ohne Absorber und somit eine Temperaturdifferenz zwischen Bereichen mit und ohne Absorber eingestellt wird, das Baufeld um eine Schichtstärke abgesenkt oder der Beschichter um eine Schichtstärke angehoben wird, diese Schritte wiederholt werden bis das gewünschte 3D-Formteilen erzeugt ist, **dadurch gekennzeichnet, dass** der Aufheizschritt auf die Basistemperatur über einen Strahler mit einer Wellenlänge von 3 - 8 µm und der Sinterschritt durch einen Strahler mit einer Wellenlänge von 0,5 - 1,5 µm erfolgt, und
wobei die Wellenlänge die Peakwellenlänge der Schwarzkörperstrahlung ist.

2. Verfahren nach Anspruch 1, wobei der Absorber eine Flüssigkeit ist, vorzugsweise eine ölbasierte Tinte, die Kohlenstoffpartikel enthält, z.B. XAAR IK821, vorzugsweise
wobei ein partikelförmiges Baumaterial mit einer mittleren Körngröße von 50 - 60 µm, vorzugsweise 55 µm, einer Schmelztemperatur von 180 - 190 °C, vorzugsweise von 186 °C und/oder einer Rekristallisationstemperatur von 140 - 150 °C, vorzugsweise von 145 °C verwendet wird, vorzugsweise ein Polyamid12, mehr bevorzugt PA2200® oder Vestosint1115®, vorzugsweise
wobei die Zeit für einen vollständigen Zyklus eines Schichtauftrags 20 bis 40 s beträgt, vorzugsweise
wobei die Basistemperatur eingestellt wird auf 145 °C bis 186 °C, vorzugsweise auf 160 °C bis 180 °C und/oder die Sintertemperatur eingestellt wird auf 175 °C bis 220 °C, vorzugsweise auf 190 °C bis 210 °C, vorzugsweise
wobei die Temperatur- bzw. Wärmezufuhr über einen Strahler oder eine Wärmelampe erreicht wird, vorzugsweise eine Glas- oder Keramiklampe, und vorzugsweise der Abstand von Strahler zu Baufeldoberfläche 10 bis 50 cm, vorzugsweise 15 bis 30 cm, mehr bevorzugt 15 bis 25 cm, beträgt.

3. Verfahren nach Anspruch 1 oder 2, wobei um das 3D-Formteil herum zusätzlicher Absorber zur Erstellung mindestens eines Mantels eingedruckt wird.

4. Verfahren nach einem der vorhergehenden Ansprüche, wobei eine Erhitzung derart stattfindet, dass nur die mit Absorber bedruckten Bereiche sich durch partielles Schmelzen oder Sintern verbinden, oder/und
wobei das Baumaterial als Pulver oder als Dispersion verwendet wird, oder/und
wobei die Schicht flächig oder in überstreichender Weise durch Strahlung erwärmt wird, oder/und
wobei das Baufeld und/oder das aufgetragene Baumaterial temperiert werden, oder/und
wobei in dem 3D-Formteil und dem Mantel derselbe oder unterschiedliche Absorber verwendet werden, oder/und
wobei für den Mantel derselbe oder ein anderer Absorber in einer Menge von 50-100%, vorzugsweise von 50-80% und mehr bevorzugt von 50-70% verwendet wird, oder/und
wobei der für den Mantel verwendete Absorber das Sintern des Baumaterials verhindert, oder/und
wobei der Absorber strahlungsabsorbierende Bestandteile, Weichmacher für das partikelförmige Baumaterial oder/und ein oder mehrere Stoffe zur Störung der Rekristallisierung umfasst.

5. Verfahren nach einem der vorhergehenden Ansprüche,
wobei für jeden Absorber eine Strahlungsquelle verwendet wird, vorzugsweise zwei Absorber mit zwei Strahlungsquellen verwendet werden, vorzugsweise
wobei die Strahlungsquellen bevorzugt Infrarote Strahlung im Wellenlängenbereich von 1 bis 20 µm abgeben und/oder die Strahlungsquelle ein kurzwelliger IR-Strahler aus Quarzglas ist, vorzugsweise mit Spezialgoldreflektor, vorzugsweise ein Heraeus Noblelight, Länge 200mm, Leistung 1,6 kW.

6. Verfahren nach Anspruch 3, wobei der Mantel in einer Wandstärke von 1 bis 10 mm, vorzugsweise 2 bis 5 mm und mehr bevorzugt von 3 mm aufgebaut wird und durch den Prozess nicht verfestigt oder
wobei der Mantel in einer Wandstärke von 1 bis 10 mm, vorzugsweise 2 bis 5 mm und mehr bevorzugt von 3 mm aufgebaut wird, einen trennenden Spalt zum Bauteil von 0,3 bis 2mm, bevorzugt 0,5 bis 1mm aufweist und durch den Prozess in ähnlicher Weise wie das Bauteil verfestigt, oder/und
wobei in dem aufgebrachten Baumaterial dieselbe Temperatur oder lokal unterschiedliche Temperaturen eingestellt oder erzeugt werden, vorzugsweise
wobei in dem Mantel eine höhere Temperatur im Vergleich zu dem 3D-Formteil erzeugt wird.

7. Verfahren nach einem der vorhergehenden Ansprüche,
wobei ein Temperaturprofil in dem aufgebrachten Baumaterial erzeugt wird, das **gekennzeichnet ist durch** eine Temperaturverteilung niedrig:höher:noch (T1<T2<T3) höher in den Bereichen Bereich außerhalb Mantel: Bereich Mantel:Bereich innerhalb Mantel (Mantel<Bereich Mantel<Bereich innerhalb Mantel) gemäß Figur 6, oder/und
wobei für den Mantel ein Absorber verwendet wird, der einen höheren Siedepunkt aufweist als der Absorber, der für das 3D-Formteil verwendet wird , oder/und
wobei die Menge des oder der Absorber über Graustufen des Druckkopfes oder Ditheringverfahren reguliert wird, oder/und wobei die Flüssigkeit mittels eines oder mehrerer Druckköpfe selektiv aufgebracht wird, vorzugsweise
wobei der oder die Druckköpfe in ihrer Tropfenmasse einstellbar sind , oder/und
wobei der oder die Druckköpfe die Flüssigkeit in einer oder in beiden Verfahrrichtungen Flüssigkeit selektiv aufbringen, oder/und
wobei das partikelförmige Baumaterial selektiv verfestigt, vorzugsweise selektiv verfestigt und gesintert wird, oder/und wobei das aufgebrachte Baumaterial zyklisch in einem vorgegebenen Temperaturband erhitzt und abgekühlt wird, oder/und
wobei sich das Temperaturband durch die Auswahl des Baumaterials unterhalb eine gegenbenen Schmelzpunktes einen Bereich von 0 bis -50 K, 0 bis -25 K, 0 bis -15 K und 0 bis -10K erstreckt, oder/und
wobei der Temperaturunterschied zwischen Bereich mit und ohne Absorber im Bereich von 0,5 bis 10 K beträgt, oder/und
wobei die Temperatur in dem mit Absorber bedruckten Bereich oder in dem Bereich innerhalb des Mantels bis zum Abschluss des Druckverfahrens und einem Abkühlschritt im wesentlichen konstant belassen wird oder in einem Temperaturbereich von 0 bis -30 K, vorzugsweise 0 bis -12 K, mehr bevorzugt 0 bis -10 K eingestellt wird.

## Claims

1. A method of producing 3D moulded parts, wherein particulate construction material is applied onto a construction field in a defined layer by means of a coater, one or more liquids or particulate material of one or more absorbers is/are selectively applied, said layer is heated in a first heating step to a basic temperature of the powder without the absorber, which is within the sintering window of the polyamide powder, and a second sintering step leads to selective solidification, by heat input, of the areas printed with absorber, at a sintering temperature above the melting temperature of the powder, wherein the areas with the selectively applied absorber heat up more in the first step than the areas without absorber, and thus a temperature difference is set between areas with and without absorber, the construction field is lowered by one layer thickness, or the coater is raised by one layer thickness, these steps are repeated until the desired 3D moulded part is produced, **characterised in that**
the heating step to said basic temperature is effected by an emitter with a wavelength of 3 - 8 µm, and the sintering step is effected by an emitter with a wavelength of 0.5 - 1.5 µm,
said wavelength preferably being the peak wavelength of blackbody radiation.

2. The method according to claim 1, wherein said absorber is a liquid, preferably an oil-based ink containing carbon particles, e.g. XAAR IK821, preferably
wherein a particulate construction material is used which has an average particle size of 50-60 µm, preferably 55 µm, a melting temperature of 180-190 °C, preferably 186 °C, and/or a recrystallization temperature of 140-150 °C, preferably 145 °C, said material preferably being polyamide 12, more preferably PA2200® or Vestosint1115®, preferably
wherein the time for one complete coating cycle is 20 to 40 s, preferably
wherein the basic temperature is set to 145 °C to 186 °C, preferably 160 °C to 180 °C, and/or the sintering temperature is set to 175 °C to 220 °C, preferably 190 °C to 210 °C, preferably
wherein the temperature or heat input, respectively, is achieved via an emitter or a thermolamp, preferably a glass or ceramic lamp, and the distance from the emitter to the construction field surface is preferably 10 to 50 cm, preferably 15 to 30 cm, more preferably 15 to 25 cm.

3. The method according to claim 2, wherein additional absorber is printed around the 3D moulded part in order to produce at least one jacket.

4. The method according to any one of the preceding claims, wherein heating takes place such that only the areas printed with absorber connect by partial melting or sintering, or/and
wherein the construction material is used in the form of a powder or dispersion, or/and
wherein the layer is heated by radiation in a planar or sweeping manner, or/and
wherein the temperature of the construction field and/or the construction material applied is controlled, or/and
wherein the same or different absorbers are used in the 3D moulded part and in the jacket, or/and
wherein the same or a different absorber is used for the jacket in an amount of 50-100%, preferably 50-80%, and more preferably 50-70%, or/and wherein the absorber used for the jacket prevents sintering of the construction material, or/and
wherein the absorber comprises radiation-absorbing components, plasticizers for the particulate construction material or/and one or more substances interfering with recrystallization.

5. The method according to any one of the preceding claims, wherein one source of radiation is used for each absorber, preferably using two absorbers with two sources of radiation, preferably
wherein the sources of radiation emit infrared radiation in the wavelength range from 1 to 20 µm and/or the source of radiation is a short-wavelength IR emitter made of quartz glass, preferably with a special gold reflector, preferably Heraeus Noblelight, with a length of 200mm and a power of 1.6 kW.

6. The method according to claim 3,
wherein the jacket is constructed with a wall thickness of 1 to 10 mm, preferably 2 to 5 mm and more preferably 3 mm, and is not solidified by the process, or
wherein the jacket is constructed with a wall thickness of 1 to 10 mm, preferably 2 to 5 mm and more preferably 3 mm, has a gap of 0.3 to 2mm, preferably 0.5 to 1mm, separating it from the part and solidifies through the process in a similar manner as the part, or/and
wherein the same temperature or locally different temperatures are set or generated in the applied construction material, preferably
wherein a higher temperature is generated in the jacket as compared to the 3D moulded part.

7. The method according to any one of the preceding claims, wherein a temperature profile is generated in the applied construction material, said temperature profile being **characterised by** a temperature distribution of low:higher:still higher (T1<T2<T3) in the following areas: area outside the jacket:jacket
area:area within the jacket (jacket<jacket area<area within the jacket) according to Figure 6, or/and
wherein an absorber is used for the jacket which has a higher boiling point than the absorber used for the 3D moulded part, or/and
wherein the amount of the absorber or absorbers is regulated via greyscale values of the print head or via dithering methods, or/and
wherein the liquid is selectively applied by means of one or more print heads, preferably
wherein the print head or print heads are adjustable in terms of drop mass, or/and
wherein the print head or print heads selectively apply liquid in one or both directions of movement, or/and
wherein the particulate construction material is selectively solidified, preferably selectively solidified and sintered, or/and
wherein the applied construction material is cyclically heated and cooled off within a predetermined temperature band, or/and
wherein, due to the selection of the construction material, said temperature band extends below a given melting point within a range of from 0 to -50K, 0 to -25K, 0 to -15K and 0 to -10K, or/and
wherein the temperature difference between areas with and without absorber is within a range of from 0.5 to 10K, or/and
wherein the temperature in the area printed with absorber or in the area within the jacket is maintained substantially constant until completion of the printing process and a cooling step, or is set within a temperature range of from 0 to -30K, preferably 0 to -12K, more preferably 0 to -10K.

## Revendications

1. Procédé de fabrication de pièces 3D, dans lequel un matériau de construction particulaire est appliqué en une couche définie sur un champ de construction au moyen d'un enducteur, un ou plusieurs liquides ou un matériau particulaire d'un ou plusieurs absorbeurs sont appliqués sélectivement, cette couche est chauffée par une première étape de chauffage à une température de base de la poudre sans absorbeur, qui se trouve dans la plage de frittage de la poudre de polyamide, et une deuxième étape de frittage conduit à une solidification sélective des zones imprimées avec l'absorbeur par l'apport de chaleur à une température de frittage supérieure à la température de fusion de la poudre, les zones avec l'absorbeur appliqué sélectivement étant chauffées plus fortement dans la première étape que les zones sans absorbeur et ainsi une différence de température entre les zones avec et sans absorbeur est réglée, le champ de construction est abaissé d'une épaisseur de couche ou l'enducteur est élevé d'une épaisseur de couche, ces étapes sont répétées jusqu'à ce que la pièce 3D souhaitée soit produite, **caractérisé en ce que**
l'étape de chauffage à la température de base est effectuée par un émetteur d'une longueur d'onde de 3 - 8 µm et l'étape de frittage par un émetteur d'une longueur d'onde de 0,5 - 1,5 µm,
la longueur d'onde étant la longueur d'onde maximale du rayonnement du corps noir.

2. Procédé selon la revendication 1, dans lequel l'absorbeur est un liquide, de préférence une encre à base d'huile contenant des particules de carbone, par exemple XAAR IK821, de préférence
dans lequel on utilise un matériau de construction particulaire ayant une granulométrie moyenne de 50 - 60 µm, de préférence 55 µm, une température de fusion de 180 - 190 °C, de préférence 186 °C et/ou une température de recristallisation de 140 - 150 °C, de préférence 145 °C, de préférence un polyamide12, de préférence PA2200® ou Vestosint1115®, de préférence
dans lequel le temps pour un cycle complet d'une application de couche est de 20 à 40 s, de préférence
dans lequel la température de base est réglée à une température de 145°C à 186°C, de préférence de 160°C à 180°C, et/ou la température de frittage est réglée à une température de 175°C à 220°C, de préférence de 190°C à 210°C, de préférence
dans lequel l'apport de température ou de chaleur est obtenu par l'intermédiaire d'un émetteur ou d'une lampe chauffante, de préférence une lampe en verre ou en céramique, et la distance entre l'émetteur et la surface du champ de construction est de 10 à 50 cm, de préférence de 15 à 30 cm, plus préférablement de 15 à 25 cm.

3. Procédé selon la revendication 1 ou 2, dans lequel un absorbeur supplémentaire est imprimé autour de la pièce 3D pour créer au moins une enveloppe.

4. Procédé selon l'une quelconque des revendications précédentes, dans lequel le chauffage s'effectue de telle manière que seules les zones imprimées avec l'absorbeur sont reliées par fusion partielle ou frittage partiel, ou/et
dans lequel le matériau de construction est utilisé sous forme de poudre ou de dispersion, ou/et
dans lequel la couche est chauffée par rayonnement sur toute sa surface ou par balayage, ou/et
dans lequel le champ de construction et/ou le matériau de construction appliqué sont tempérés, ou/et
dans lequel le même ou différents absorbeurs sont utilisés dans la pièce 3D et l'enveloppe, ou/et
dans lequel le même absorbeur ou un absorbeur différent est utilisé pour l'enveloppe en une quantité de 50-100 %, de préférence de 50-80% et plus préférablement de 50-70%, ou/et
dans lequel l'absorbeur utilisé pour l'enveloppe empêche le frittage du matériau de construction, ou/et
dans lequel l'absorbeur comprend des composants absorbant les radiations, des plastifiants pour le matériau de construction particulaire ou/et une ou plusieurs substances pour perturber la recristallisation.

5. Procédé selon l'une quelconque des revendications précédentes, dans lequel une source de rayonnement est utilisée pour chaque absorbeur, utilisant de préférence deux absorbeurs avec deux sources de rayonnement, de préférence
dans lequel les sources de rayonnement émettent de préférence un rayonnement infrarouge dans la gamme de longueurs d'onde de 1 à 20 µm et/ou la source de rayonnement est un emetteur IR à ondes courtes en verre de quartz, de préférence avec un réflecteur spécial en or, de préférence un Heraeus Noblelight, d'une longueur de 200 mm et d'une puissance de 1,6 kW.

6. Procédé selon la revendication 3,
dans lequel l'enveloppe est construite avec une épaisseur de paroi de 1 à 10 mm, de préférence de 2 à 5 mm et plus préférablement de 3 mm, et n'est pas solidifiée par le procédé ou
dans lequel l'enveloppe est construite avec une épaisseur de paroi de 1 à 10 mm, de préférence de 2 à 5 mm et plus préférablement de 3 mm, présente un intervalle de séparation par rapport à la pièce de 0,3 à 2 mm, de préférence de 0,5 à 1 mm, et est solidifiée par le procédé de manière similaire à la pièce, ou/et
dans lequel la même température ou des températures localement différentes sont réglées ou générées dans le matériau de construction appliqué, de préférence
dans lequel une température plus élevée est générée dans l'enveloppe par rapport à la pièce 3D.

7. Procédé selon l'une quelconque des revendications précédentes, dans lequel un profil de température est généré dans le matériau de construction appliqué, qui est **caractérisé par** une distribution de température faible :
plus élevée : encore (T1<T2<T3) plus élevée dans les zones : zone à l'extérieur de l'enveloppe : zone de l'enveloppe : zone à l'intérieur de l'enveloppe (enveloppe < zone de l'enveloppe < zone à l'intérieur de l'enveloppe) selon la figure 6, ou/et
dans lequel un absorbeur est utilisé pour l'enveloppe qui a un point d'ébullition plus élevé que l'absorbeur utilisé pour la pièce 3D, ou/et
dans lequel la quantité dudit ou desdits absorbeur(s) est réglée par l'échelle de gris de la tête d'impression ou un procédé de tramage, ou/et
dans lequel le liquide est appliqué sélectivement au moyen d'une ou plusieurs têtes d'impression, de préférence
dans lequel la masse des gouttes de la tête d'impression ou des têtes d'impression est réglable, ou/et
dans lequel la ou les têtes d'impression appliquent du liquide sélectivement dans un sens ou dans les deux sens de déplacement, ou/et
dans lequel le matériau de construction particulaire est sélectivement solidifié, de préférence sélectivement solidifié et fritté, ou/et
dans lequel le matériau de construction appliqué est chauffé et refroidi cycliquement dans une plage de température prédéterminée, ou/et
dans lequel, par la sélection du matériau de construction, la plage de température s'étend en dessous d'un point de fusion donné sur une plage de 0 à -50 K, de 0 à -25 K, de 0 à -15 K et de 0 à -10K, ou/et
dans lequel la différence de température entre la zone avec et sans absorbeur est comprise entre 0,5 et 10 K, ou/et
dans lequel la température dans la zone imprimée avec l'absorbeur ou dans la zone à l'intérieur de l'enveloppe est maintenue sensiblement constante jusqu'à ce que le processus d'impression soit terminé et qu'une étape de refroidissement soit effectuée, ou est réglée dans une plage de température de 0 à -30 K, de préférence de 0 à -12 K, plus préférablement de 0 à -10 K.
